# EUROPEAN PATENT APPLICATION

(11) **EP 3 979 752 A1**
(43) Date of publication of application: **06.04.2022**
(21) Application number: 20199693.1
(22) Date of filing: 01.10.2020
(51) Int. Cl.: H04W 74/08

(54) **USER EQUIPMENT AND BASE STATION INVOLVED IN TRANSMISSION OF SMALL DATA**

(71) Applicant: Panasonic Intellectual Property Corporation of America, Torrance, CA 90503 (US)
(72) Inventor: TAO, Ming-Hung, 63225 Langen (DE); SUZUKI, Hidetoshi, Osaka-shi,, Osaka 540-6207 (JP); SHAH, Rikin, 63225 Langen (DE)
(74) Representative: Grünecker Patent- und Rechtsanwälte PartG mbB

(57) **Abstract**

The present disclosure relates to a user equipment (UE), comprising the following. A receiver receives a UE identification from a serving base station (BS). The UE is in an inactive state. The UE identification is usable by the UE to perform a monitoring function for reception of resource assignments, at least including uplink resource assignments. The receiver receives an uplink resource assignment transmitted from the serving BS, based on the UE identification, assigning radio resources for the transmission of small data. A transmitter performs transmission of the small data to the serving BS, based on the received uplink resource assignment. A processor determines whether to extend the monitoring function for reception of at least another uplink resource assignment based on the UE identification, wherein the determination is based on a message received from the serving BS or based on whether the UE has further small data available for transmission.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for facilitating a UE to perform an improved small-data-transmission procedure.

In an embodiment, the techniques disclosed here feature a user equipment comprising the following.

A receiver of the UE receives an assignment of a UE identification from a base station that is currently serving the UE. The UE is in an inactive state out of a connected state, an idle state and the inactive state. The UE identification is usable by the inactive UE to perform a monitoring function for reception of resource assignments, at least including uplink resource assignments, transmitted from the serving base station. The receiver receives an uplink resource assignment transmitted from the serving base station, based on the UE identification. The received uplink resource assignment assigns radio resources usable by the inactive UE for the transmission of small data. A transmitter of the UE performs transmission of the small data to the serving base station, based on the received uplink resource assignment. A processor determines whether to extend the monitoring function for reception of at least another uplink resource assignment based on the UE identification, wherein the determination is based on a message received from the serving base station or based on whether the UE has further small data available for transmission.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6 and 7**: illustrate the contention-based and contention-free RACH procedure;
- **Fig. 8**: illustrates the possible RRC state changes,
- **Fig. 9**: illustrates a message exchange for the RRC Resume procedure,
- **Fig. 10 and 11**: illustrate a message exchange for the RRC Release procedure,
- **Fig. 12**: illustrates a message exchange of the prior art for uplink data transmission, including a state change of the UE from Inactive to Connected state;
- **Fig. 13 and 14**: illustrate an exemplary four-step RACH respectively two-step RACH usable for small-data uplink transmissions for an RRC_INACTIVE UE,
- **Fig. 15**: illustrates an exemplary single-SDT transmission procedure,
- **Fig. 16**: illustrates a possible solution for a multi-SDT transmission procedure,
- **Fig. 17**: illustrates an exemplary and simplified structure of a UE and gNB,
- **Fig. 18**: illustrates a structure of the UE according to an exemplary implementation of an improved small-data uplink transmission procedure,
- **Fig. 19**: is a flow diagram for the UE behavior, according to an exemplary implementation of the improved small-data uplink transmission procedure,
- **Fig. 20**: illustrates a structure of the base station according to an exemplary implementation of the improved small-data uplink transmission procedure,
- **Fig. 21**: is a flow diagram for the base station behavior, according to an exemplary implementation of the improved small-data uplink transmission procedure,
- **Fig. 22**: is a signaling diagram illustrating multiple small-data transmissions from the UE to the base station, according to one variant of a first solution of the improved small-data uplink transmission procedure,
- **Fig. 23**: is a signaling diagram illustrating multiple small-data transmissions from the UE to the base station, according to another variant of the first solution of the improved small-data uplink transmission procedure,
- **Fig. 24**: is a signaling diagram illustrating multiple small-data transmissions from the UE to the base station, according to another variant of the first solution of the improved small-data uplink transmission procedure,
- **Fig. 25**: is a flow diagram for the UE behavior according to an exemplary implementation of the first solution of the improved small-data uplink transmission procedure,
- **Fig. 26**: is a flow diagram for the base station behavior according to an exemplary implementation of the first solution of the improved small-data uplink transmission procedure,
- **Fig. 27**: is a signaling diagram illustrating multiple small-data transmissions from the UE to the base station, according to a variant of the second solution of the improved small-data uplink transmission procedure,
- **Fig. 28**: is a signaling diagram illustrating multiple small-data transmissions from the UE to the base station, according to another variant of the second solution of the improved small-data uplink transmission procedure,
- **Fig. 29**: is a signaling diagram illustrating multiple small-data transmissions from the UE to the base station, according to a variant of the third solution of the improved small-data uplink transmission procedure,
- **Fig. 30**: is a signaling diagram illustrating multiple small-data transmissions from the UE to the base station, according to another variant of the third solution of the improved small-data uplink transmission procedure, and
- **Fig. 31**: is a signaling diagram illustrating multiple small-data transmissions from the UE to the base station, according to a variant of the fourth solution of the improved small-data uplink transmission procedure,

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

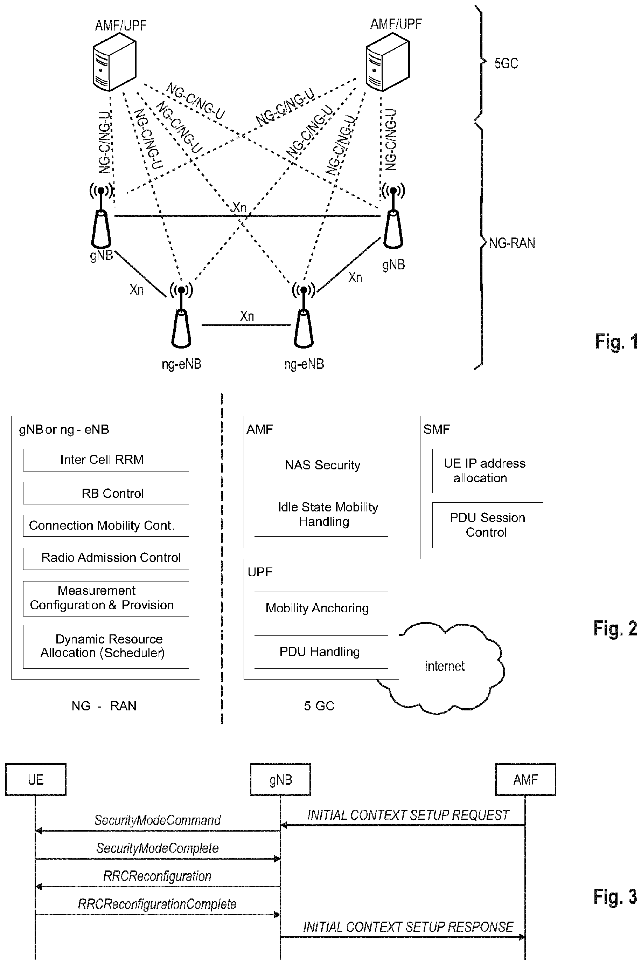

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.2.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

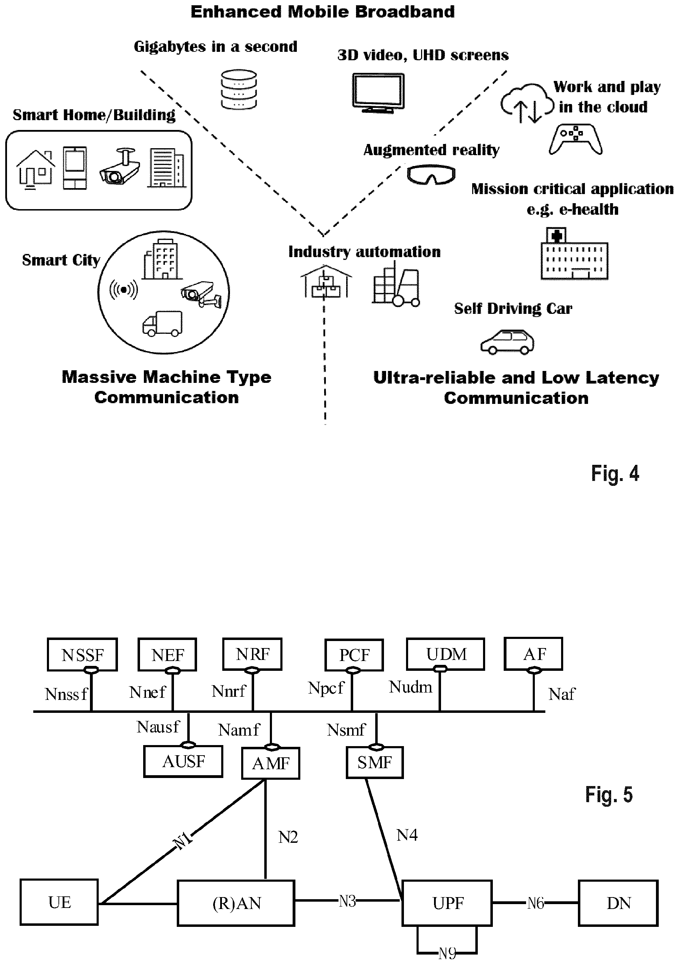

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 15.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.5.1, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, section 9.2.6), including the following. The random access procedure is triggered by a number of events:
- Initial access from RRC_IDLE;
- RRC Connection Re-establishment procedure;
- DL or UL data arrival during RRC_CONNECTED when UL synchronisation status is "non-synchronised";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery;
- Consistent UL LBT failure on SpCell.

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

There can be at least two types of random access procedures, allowing access to be either contention based (i.e. implying an inherent risk of collision), or contention free (non-contention based). An exemplary definition of a random access procedure can be found in 3GPP TS 38.321, v16.1.0 section 5.1.

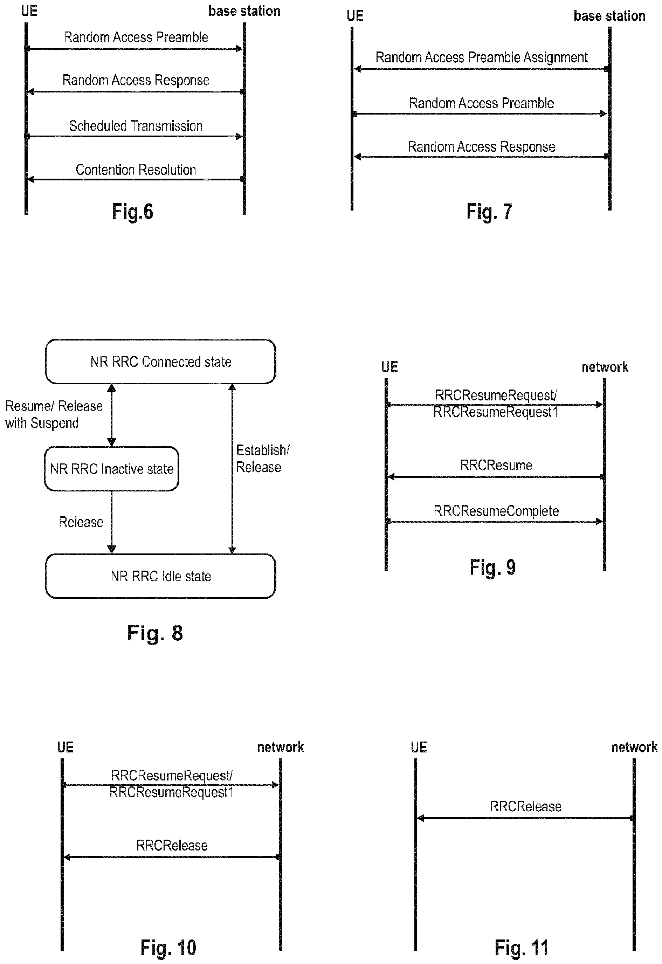

The RACH procedure will be described in the following in more detail, with reference to **Fig. 6 and 7****.** In the following, the contention-based random access procedure is being described in more detail with respect to **Fig. 6****.** This procedure consists of four "steps" and thus can be termed for example as a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipments transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, because the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure (i.e. multiple user equipment have sent the same preamble on the same PRACH resource), the colliding user equipments will receive the same T-CRNTI within the random access response and will also collide in the same uplink resources when transmitting their scheduled transmission in the third step of the RACH procedure. In case the scheduled transmission from one user equipment is successfully decoded by the base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 7** is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

Generally, for RACH preambles, see for example, 3GPP TS 38.211 V16.2.0, "Table 6.3.3.2-2: Random access configurations for FR1 and paired spectrum/supplementary uplink" and section 6.3.3.2, "Mapping to physical resources".

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine is extended with an inactive state (see e.g. TS 38.331 v16.1.0, Figures 4.2.1-1 and 4.2.1-2), as explained in the following.

The RRC in NR 5G (see TS 38.331, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 8****:**
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are characterized as follows (see section 4.2.1 of TS 38.331):
***"RRC_IDLE:***
   - *A UE specific DRX may be configured by upper layers;*
   - *UE controlled mobility based on network configuration;*
   - *The UE:*
      - *Monitors Short Messages transmitted with P-RNTI over DCI (see clause 6.5);*
      - *Monitors a Paging channel for CN paging using 5G-S-TMSI;*
      - *Performs neighbouring cell measurements and cell (re-)selection;*
      - *Acquires system information and can send SI request (if configured).*
      - *Performs logging of available measurements together with location and time for logged measurement configured UEs.*
*- **RRC_INACTlVE:***
   - *A UE specific DRX may be configured by upper layers or by RRC layer;*
   - *UE controlled mobility based on network configuration;*
   - *The UE stores the UE Inactive AS context;*
   - *A RAN-based notification area is configured by RRC layer;*
      *The UE:*
      - *Monitors Short Messages transmitted with P-RNTI over DCI (see clause 6.5);*
      - *Monitors a Paging channel for CN paging using 5G-S-TMSI and RAN paging using fulll-RNTI;*
      - *Performs neighbouring cell measurements and cell (re-)selection;*
      - *Performs RAN-based notification area updates periodically and when moving outside the configured RAN-based notification area;*
      - *Acquires system information and can send SI request (if configured).*
      - *Performs logging of available measurements together with location and time for logged measurement configured UEs.*
*- **RRC_CONNECTED:***
   - *The UE stores the AS context;*
   - *Transfer of unicast data to*/*from UE;*
   - *At lower layers, the UE may be configured with a UE specific DRX;*
   - *For UEs supporting CA, use of one or more SCells, aggregated with the SpCell, for increased bandwidth;*
   - *For UEs supporting DC, use of one* SCG, *aggregated with the MCG, for increased bandwidth;*
   - *Network controlled mobility within NR and to*/*from E-UTRA;*
   - *The UE:*
      - *Monitors Short Messages transmitted with P-RNTI over DCI (see clause 6.5)*, *if configured;*
      - *Monitors control channels associated with the shared data channel to determine if data is scheduled for it;*
      - *Provides channel quality and feedback information;*
      - *Performs neighbouring cell measurements and measurement reporting;*
      - *Acquires system information;*
      - *Performs immediate MDT measurement together with available location reporting.."*

According to the characteristics of the RRC Inactive state, for the Inactive UE the connection (both for user plane and control plane) is maintained with RAN and the core network. More specifically, in RRC Inactive, although the connection still exists, it is suspended, or put differently the connection is not active anymore. On the other hand, in RRC Connected state, the connection exists and is active, e.g. in the sense that it is used for a data transmission. In RRC Idle state, the UE has no RRC connection with the RAN and the core network, which also means that e.g. the radio base station does not have any context of the UE and e.g. does not know the identification of the UE and does not have security parameters relating to the UE to be able to properly decode data transmitted by the UE (security e.g. ensures integrity of the transmitted data). UE context may be available in the core network, but would have to be fetched first by the radio base station.

In addition, the paging mechanism (may also be called e.g. notification mechanism) for user equipments in the radio cell is based on so called radio access network, RAN,-based notification areas (in short RNAs). The radio access network should be aware of the current RNA the user equipment is located in, and the user equipment may assist the gNB to track the UE moving among various RNAs. The RNA can be UE-specific.

One example of an RRC resume procedure to move the UE from the RRC_Inactive state to the RRC_Connected state (see TS 38.331 section 5.3.13) is explained in the following with reference to **Fig. 9****.** The purpose of this procedure is to resume a suspended RRC connection (may include resuming signaling and data radio bearers).

The procedure allows to transmit either the RRCResumeRequest message or the RRCResumeRequest1 message. When transmitting the RRCResumeRequest message, the short I-RNTI (e.g. truncated I-RNTI) is used as the UE identity (exemplary termed *"resumeldentity"*). When transmitting the RRCResumeRequest1 message, the full I-RNTI is used as the UE identity (exemplary termed *"resumeIdentity"*). UE checks the indication *"useFullResumeID"* in SIB1 and determines to transmit either the RRCResumeRequest or the RRCResumeRequest1 message. If the *"useFullResumeID"* indicates "true", the UE will transmit RRCResumeRequest1 with full I-RNTI; otherwise, the UE will transmit RRCResumeRequest with short I-RNTI. The actions the UE performs for the RRC Resume procedure (see section 5.3.13.4 of TS 38.331) include resuming the SRB2 and all DRBs (which were suspended when entering the RRC Inactive state, see below release procedure).

The RRCResume procedure can be also used to perform the RNA update upon UE moving out of the configured RNA. In this case, the network sends an RRCRelease instead of RRCResume as the response to the RRCResumeRequest/RRCResumeRequest1 message, as shown in **Fig.10****.** The UE remains in RRC_INACTIVE after receiving the RRCRelease message.

One example of a subsequent RRC connection release procedure to transition the UE from the RRC_Connected state to the RRC Inactive state (see TS 38.331 section 5.3.8) is explained in the following with reference to **Fig. 11****.** The purpose of this procedure is to release the RRC connection or to suspend the RRC connection. For instance, the network initiates the RRC connection release procedure to transit a UE in RRC_CONNECTED to RRC_IDLE or to RRC_INACTIVE. The actions the UE performs for the RRC Connection Release procedure (see section 5.3.8.3 of TS 38.331) include suspending all SRB(s) (Signaling Radio Bearers) and DRB(s) (Data Radio Bearers) except SRB0, in case the release is done with suspend (e.g. "*RRCRelease* includes *suspendConfig').* Correspondingly, the UE in RRC Inactive state does not have any non-suspended or active DRB (UE only has suspended DRBs). SRB0, which is kept active, even in the RRC Inactive state, can be used by the UE e.g. for performing the RACH procedure, e.g. when carrying RRC messages, such as the RRCResumeRequest, RRCResumeRequest1, RRCSetupRequest.

### Small-data transmissions

The characteristics of the small-data transmissions that are targeted in this disclosure refer to any service with the characteristics that data bursts in UL/DL are small and optionally rather infrequent with no strict requirements on delay. For instance, a single data transmission that it so small that it can be sent by the UE in one transmission (e.g. in RACH, see below) can be considered a small-data transmission. Typical non-limiting examples of traffic characteristics are captured in the following table (see TR 25.705 v13.0.0 section 5).

**Characteristics of the small-data transmissions**

| **Traffic parameter** | **Value** |
|---|---|
| application packet size | 100 bytes (UL); 100 bytes (DL) |
| latency¹ | 5s to 30min; 1 hour for no mobility (static, pedestrian) |
| frequency | every minute and up to monthly |
| NOTE 1: latency is the duration from when the packet arrives at the buffer until it is completely transmitted (delay tolerance of the application). | |

Another possible exemplary definitions can depend on the configuration of the gNB. For instance, the gNB can define that data below a certain threshold (e.g. 1000 kbyte) can be considered small-data, whereas data above that threshold is not to be considered small-data. This threshold could e.g. be defined in connection with the buffer status.

Alternatively, a definition of what small-data is could also be fixed by a suitable standard, e.g. providing a similar data amount threshold as described above.

### Small-data transmission by UE in RRC Inactive state

In more detail, 5G NR supports the RRC_INACTIVE state, and UEs with infrequent (periodic and/or non-periodic) data transmission are generally maintained by the network in the RRC_INACTIVE state. Until Rel-16, the RRC_INACTIVE state does not support data transmissions. Hence, the UE has to resume the connection (e.g. move to RRC_CONNECTED state) for any DL (MobileTerminated) and UL (MobileOriginated) data. Connection setup (or resume) and subsequently release to RRC_INACTIVE state would have to happen for each data transmission, however small and infrequent the data packets are. This results in unnecessary power consumption and signalling overhead.

Specific examples of small and infrequent data traffic include the following use cases:
- Smartphone applications:
   ∘ Traffic from Instant Messaging services (whatsapp, QQ, wechat etc.)
   ∘ Heart-beat/keep-alive traffic from IM/email clients and other apps
   ∘ Push notifications from various applications
- Non-smartphone applications:
   ∘ Traffic from wearables (periodic positioning information etc.)
   ∘ sensors (Industrial Wireless Sensor Networks transmitting temperature, pressure readings periodically or in an event triggered manner etc.)
   ∘ smart meters and smart meter networks sending periodic meter readings

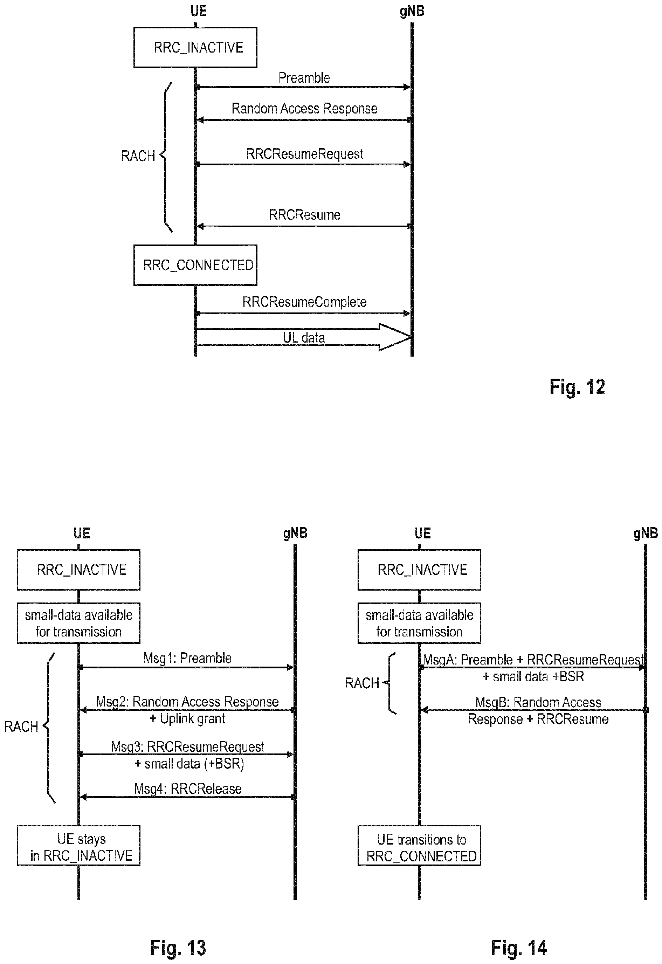

An exemplary procedure of the prior art (in this case a 5G-NR-compliant prior art solution) to enable a UE in the RRC Inactive state, after transition to the RRC Connected state, to transmit (small) data will be briefly explained in the following with reference to **Fig. 12****.** As apparent from the figure, the UE is assumed to be in RRC_Inactive state, which may e.g. involve that the UE (and gNB) has all data radio bearers suspended, and that no data can be transmitted to the gNB. In order to enable the UE to transmit data, the UE has to be first transitioned into the RRC Connected state, which can be done by the UE requesting to resume the RRC connection (here transmitting *RRCResumeRequest)* as part of the RACH procedure (in Fig. 12, e.g. using the 4-step RACH procedure).

In detail, the UE may transmit the preamble to the current gNB, then receives a corresponding random access response with a (small) UL grant of radio resources, which are used by the UE to transmit the RRCResumeRequest message as msg3 of the RACH procedure.

Finally, the new gNB provides the RRCResume message to the UE, which in turn then transitions to the RRC Connected state, including the resumption of all data radio bearers. In RRC_Connected state, the UE is then able to transmit the UL data.

It is not yet defined how and when the gNB decides that a UE should indeed by transitioned to RRC_CONNECTED state, after this UL small data transmission. The control in said respect is likely to still rest with the gNB, although the UE might request to resume the RRC connection. One exemplary possibility is that the gNB takes into account the buffer status report, that the UE could transmit e.g. in the Msg3 or MsgA, to decide whether the UE should transition to the RRC_CONNECTED state or not. The buffer status report indicates the actual amount of data in the UE buffer. For instance, if the buffer status report indicates a large amount of data in the UE buffer, the gNB might decide to transition the UE from RRC_INACTIVE to RRC_CONNECTED state (e.g. by gNB sending *RRCResume* message). On the other hand, if the buffer status report indicates only little amount of data in the UE buffer, the gNB might decide to keep the UE in the RRC_INACTIVE state (e.g. by gNB sending RRCRelease message). Furthermore, also the absence of the buffer status report in the Msg3/MsgA may provide an indication to the gNB, e.g. that no further data is available in the UE buffer and the UE can stay in RRC_INACTIVE.

As can be appreciated from the description of Fig. 12, the above process, according to which the UE first needs to transition from the inactive state to the connected state such that the UE can send any user data in the uplink, introduces latency and consumes significant UE power for each transmission of user data. Moreover, the signalling overhead caused for INACTIVE-state UEs when transmitting small data packets is a general problem, and will even be exacerbated with more UEs in 5G NR.

Therefore, 3GPP is intending to enable the RRC_Inactive UE to transmit small data in the uplink without changing the UE state to RRC Connected. In general, any device that has intermittent small data packets, when in the INACTIVE state, will benefit from enabling small-data transmissions in the INACTIVE state.

It was agreed to enable small data transmission (SDT) by using 4-step RACH, 2-step RACH, or a configured-grant (CG) procedure. The present application revolves around a RACH-based SDT procedure, be it based on the 4-step RACH or 2-step RACH.

No final agreements have been reached in 3GPP for a standardized method on how the transmission of (small) data can be enabled for a UE that stays in the RRC Inactive state.

One possibility for a UE to transmit small data in the uplink when still in RRC_INACTIVE state is to use the RACH procedure, as mentioned above. The following assumptions, made for Fig. 13 and 14 and also for subsequently describing the concepts, solutions and variants of the invention, are to be considered only as exemplary and not as limiting the RACH-based small-data uplink transmission according to the invention.

Moreover, when assuming a RACH-based small-data uplink transmission as an example, the UE can use either the 2-step RACH or 4-step RACH to send small data in the uplink (see MsgA or Msg3), and simplified and exemplary RACH-based small-data uplink transmission procedures are illustrated in Fig. 13 and 14. In both Fig. 13 and 14 it is exemplarily assumed that the UE is already in RRC_INACTIVE state and has small-data available for transmission. **Fig. 13** assumes a 4-step RACH procedure and illustrates how the UE transmits the small data with the Msg3. **Fig. 14** assumes a 2-step RACH procedure and illustrates how the UE transmits the small data with the MsgA.

According to one example, the control message and the small data are transmitted together to the base station, e.g. together in the same transport block, where the UE builds the transport block using the resources and multiplexes data and signaling together in the same transport block of the MAC layer. For the 4-step RACH case, the small data is transmitted in the Msg3, based e.g. on the radio resources granted through the uplink grant received from the gNB in the Msg2. For the 2-step RACH case, the small data is transmitted in the MsgA, e.g. using radio resources that are selected by the UE from some previously-configured radio resources, e.g. in connection with the selected RACH preamble.

Moreover, Fig. 13 and 14 illustrate that the buffer status report can be included in the Msg3 respectively MsgA, although the BSR is only illustrated within parentheses to reflect that including the BSR is merely an exemplary possibility. For instance, in Fig. 13 it is exemplarily assumed that the gNB decides to keep the UE in RRC_Inactive state, e.g. because the BSR is either absent or indicates only little uplink small data in the UE buffer. Correspondingly, an RRCRelease message is transmitted for the Msg4. On the other hand, in Fig. 14 it is exemplarily assumed that the gNB decides to transition the UE to the RRC_Connected state, e.g. because the BSR indicates a significant amount of uplink data in the UE buffer that has to be transmitted by the UE. Correspondingly, an RRCResume message is transmitted for the MsgA.

Moreover, although in Fig. 13 the uplink grant is illustrated separately from the Random Access Response of Msg2, in Fig. 13 and in similar implementations in the following, the uplink grant may equally be considered as belonging to and being part of the Random Access Response.

In summary, a possible exemplary implementation of a small-data uplink transmission for RRC_INACTIVE UEs is possible and could be e.g. based on the RACH procedure, be it a 2-step or 4-step RACH procedure (see Fig. 13 and 14).

In the above, a single small-data uplink transmission (e.g. using the Msg3/MsgA of RACH) was discussed. Moreover, 3GPP agreed that it should be possible for a UE in RRC_INACTIVE state to send (and possibly receive) multiple UL (and respectively DL) transmissions using a same procedure without transitioning to the RRC_CONNECTED state.

However, no agreements have been reached in 3GPP on how to implement and define such a multi-SDT transmission procedure.

### Further improvements

The inventors have thus identified the necessity to define an improved small-data transmission procedure, so as to support such multiple small-data transmissions and thereby avoid potential problems and challenges in connection therewith, as will become more apparent from below.

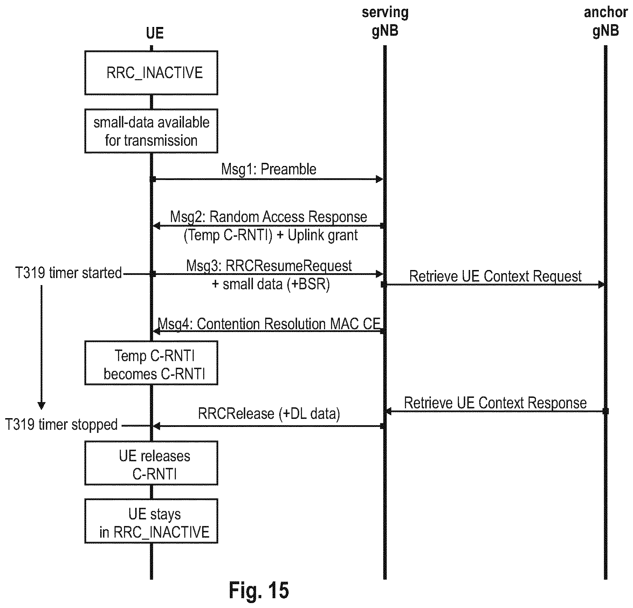

In order facilitate the discussion on the potential problems involved in a multi-SDT transmission procedure, **Fig. 15** illustrates an exemplary implementation of a single-SDT transmission procedure with more details than the simplified exemplary illustration of Fig. 13. To facilitate the illustration and subsequent discussion, it is exemplarily assumed that the multi-SDT transmission procedure is based on the 4-step RACH.

Furthermore, it is exemplarily assumed that the UE, while in RRC_INACTIVE state, has moved from its previous gNB (anchor gNB) to the current gNB (which thus is its current serving gNB). This may require that the serving gNB, as part of the RACH procedure, obtains the UE context from the anchor gNB, e.g. so that the serving gNB is able to authenticate the UE (unknown to the serving gNB).

In said connection, it is also exemplarily assumed that the Contention Resolution Identity MAC Control Element (CR MAC CE) is transmitted separately from the response to the RRCResumeRequest message of the UE (in the example of Fig. 15, the RRCRelease message). The main purpose of said Msg4 and the corresponding CR MAC CE are to resolve the possible contention of the contention-based RACH, such that waiting for the serving gNB to retrieve the UE context is not necessary. Thus, the serving gNB can transmit the CR MAC CE as early as possible (e.g. when the result of contention resolution is determined at the serving gNB), while the transmission of the response message to the RRCResumeRequest message from the UE can be performed by the serving gNB after receiving and processing the UE context. On the other hand, in other scenarios the Contention Resolution Identity MAC Control Element can be transmitted together with the RRC response message (e.g. the RRCRelease or RRCResume).

The sequence of steps for the single-SDT procedure as illustrated in Fig. 15 is as follows.
1. The UE, having small-data available for transmission, initiates the RACH to perform the small-data transmission. Correspondingly, the UE sends a preamble to the serving gNB.
2. In turn, the UE receives a temporary UE identifier (e.g. Temporary C-RNTI) and an uplink resource grant as the RAR from the serving gNB.
3. The UE then transmits the RRCResumeRequest message together with the UL small data, based on the previously-received UL grant. At substantially that point in time, the UE also starts a timer that is responsible for controlling the RRC resume request procedure, termed T319. More detailed information on the timer T319 will be provided below.
   In more detail, according to the exemplary 5G-compliant implementations, the T319 timer regulates the maximum duration of an RRC resume request procedure. The timer T319 is started when transmitting the RRCResumeRequest message and is stopped when receiving a corresponding response thereto, such as the RRCRelease or RRCResume message. If T319 expires before being stopped, the UE will consider that the RRC resume request procedure has failed and will transition to the RRC_IDLE state.
   Exemplarily, the value to be applied for the T319 is determined by the gNB, taking into account the time required for obtaining UE context(s) from other anchor gNBs. The longer T319 is, the later the serving gNB is allowed to send the response message (e.g. RRCRelease or RRCResume) to the UE. The value of T319 can for example be broadcast by the gNB in its cell using the system information (SIB) such that the T319 timer is cell-specific, and not UE-specific.
4. The serving gNB attempts to retrieve the context of the UE from the anchor gNB, based on the information content of the RRCResumeRequest message, which e.g. includes a corresponding UE ID for the context retrieval (such as the Inactive-RNTI, I-RNTI).
5. The serving gNB, without waiting for the completion of the UE-Context retrieval, sends the Contention Resolution Identity MAC CE to the UE, which completes the RACH procedure. The UE receives this CR MAC CE, and compares the Contention Resolution Identity therein with the UE ID (e.g. I-RNTI) transmitted before to the serving gNB in the RRCResumeRequest message. If the two identities match, the contention is positively resolved.
6. As a result of the positive RACH contention resolution, the previously-received Temporary C-RNTI is now used by the UE as the C-RNTI.
7. Next, it is assumed that the serving gNB successfully retrieves the UE's context from the anchor gNB.
8. Then, the serving gNB determines how to respond to the RRCResumeRequest message, and in this exemplary case of Fig.15 transmits an RRCRelease message to the UE so as to maintain the UE in RRC_Inactive. At the UE side, the UE stops the T319 timer, when receiving the RRCRelease message.
9. Furthermore, as a result of the RRCRelease message, the UE stays in RRC_INACTIVE and thus releases (can also be termed discards) the C-RNTI. On the other hand, the UE e.g. would keep the C-RNTI when receiving an RRCResume message as the response to the previous RRCResumeRequest message of above step 3.

In order to support multi-SDT transmissions, the above sequence of steps, only involving a single-small-data transmission at step 3, would have to be extended. For instance, the UE would have to obtain additional suitable UL radio resources and would then correspondingly have to perform one or more UL small-data transmissions.

However, in order for the UE to be able to receive uplink resource grants from the serving gNB, it would be advantageous that the UE has a valid C-RNTI (i.e. after the temporary C-RNTI is transformed to the C-RNTI) to which the uplink resource grants (such as a DCI of Format 0_0, 0_1, or 0_2) are addressed. In other words, the validity of the C-RNTI is important for the implementation of a multi-SDT procedure. Whether or not the C-RNTI is kept by the UE however depends on the response received by the UE relating to the initiated RRCResumeRequest as well as on the operation of timer T319, as apparent from above.

More specifically, the C-RNTI of the UE will be released in case the UE receives an RRCRelease message (see above step 8) or in case the T319 expires (e.g. before reception of the RRCRelease message). For instance, the current TS 38.331 standard defines the UE actions when receiving the RRCRelease message in its section 5.3.8.3, where the UE actions involve the release of the C-RNTI (e.g. as part of the MAC reset). Moreover, the current TS 38.331 standard also defines e.g. the UE actions when the T319 timer expires, namely in section 5.3.13.5, where the UE actions involve the transition to RRC_IDLE, which in turn (see section 5.3.11 of TS 38.331) again involves the release of the C-RNTI (e.g. as part of releasing all resources, such as the RLC entity, MAC configuration, etc.).

In summary, the C-RNTI of the UE will be kept valid in the UE, while the T319 time is running and until the RRCRelease message is received.

Consequently, the C-RNTI is only available for a particular amount of time, which could be insufficient for the UE to perform the multi-SDT procedure.

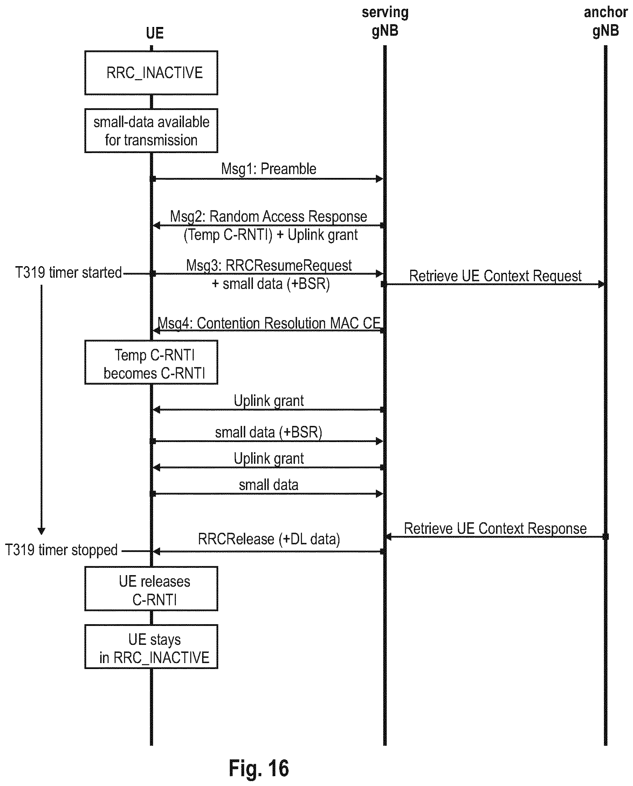

One possible solution could be to implement the additional one or more small-data transmissions at the earliest time that is reasonably possible, e.g. after the UE receives the contention resolution of Msg4 (see Fig. 15 and explanation of step 5) but before the reception of the RRCRelease message. Such a solution is illustrated in **Fig. 16**, which is similar to Fig. 15 and makes corresponding assumptions.

In such a solution, the serving gNB could transmit uplink grants to the UE, addressed to the C-RNTI, and the UE in turn could perform the corresponding small-data uplink transmissions using the assigned uplink radio resources, before the RRCRelease message is transmitted by the serving gNB.

The small-data transmissions could be optionally transmitted together with a buffer status report, such that the serving gNB is aware of how much further data is in the UE buffer and can then decide if another small-data transmission is necessary and, if so, create the next UL grant accordingly.

Thus, according to the solution of Fig. 16, the small-data transmissions can be effectively and quickly implemented.

Such a solution however might involve the disadvantage that the UE is not yet authenticated by the serving gNB, because it has not yet received the UE context from the anchor gNB. Generally, it would be preferable that the UE is first authenticated by the serving gNB (based on the UE Context), before UL radio resources are actually reserved and assigned to such a new UE. For instance, the UE context retrieval could fail or reveal that the UE is fraudulent or fake, such that the assigned radio resources intended for the UL SDT could have been wasted.

Furthermore, in the exemplary scenario of Fig. 16, it is assumed that two additional small-data transmissions (three SDT in total) are possible, before the UE context is retrieved and the gNB sends the RRCRelease message to the UE. The UE then would stop the T319 timer and release the C-RNTI. Further UL small data transmission would then not be possible anymore. However, the amount of time available would be dependent on the time necessary for the UE context retrieval, which can vary a lot and be in fact quite brief.

A possible variation of the discussed solution could involve that the gNB waits with the transmission of the RRCRelease message, so as to avoid that the UE discards the C-RNTI. For instance, the gNB could wait such that the RRCRelease message is received just in time by the UE to stop the T319 timer and thus avoid the failure of the RRCResumeRequest procedure and thus possibly the transition to the RRC_IDLE state. This would maximize the time available for the small-data transmissions, being somewhat independent from when the UE context is actually received by the serving gNB. The waiting time by the serving gNB is however limited by the value of the T319 timer, because the RRCRelease should be transmitted by the serving gNB in time to be received by the UE before expiry of the T319 timer. Thus, there might not be time sufficient for performing the necessary number of small-data transmissions. In current 3GPP 5G-compliant implementations, the T319 timer can be set to a maximum of 2000ms (see TS 38.331 v16.1.0 section 6.3.2 Information Element *"UE-TimersAndConstants": "ENUMERATED {ms100, ms200, ms300, ms400, ms600, ms1000, ms1500, ms2000}"*)*.* This maximum of 2000ms was defined to be able to cope with the UE-context retrieval from another gNB including a possible delay due to the backhaul link between the serving gNB and the anchor gNB that keeps the UE context for the inactive UE. The maximum value of the T319 timer was not designed to accommodate the multi-SDT procedure and thus is likely to be too small.

As a further optional variant of the above solution(s) (based on Fig. 16), the length of the T319 timer can be extended, i.e. made longer. In said respect, the maximum that the T319 timer can be possibly defined could be set much higher (e.g. 8000ms). This would have the benefit that an improved multi-SDT procedure could allow the UE to keep the C-RNTI longer valid and thus allow more time for the multiple small-data transmissions before receiving the RRCRelease message.

However, setting the T319 timer to a higher value has also disadvantages, because other UEs that neither perform nor possibly even support multiple small-data transmissions would be negatively impacted. The value of the T319 timer is broadcast by the serving gNB in its cell as part of the system information and is adopted by all UEs, including those UEs that do not perform or support multi-small-data transmissions, also including those UEs that just intend to perform RNA (RAN-based notification area update) or intend to resume their RRC connections. The extended T319 timer value thus negatively impacts the RRCResumeRequest procedure of those UEs, because the UEs then detect a possible failure of said procedure at a later point in time when the T319 timer expires.

Another challenge for implementing the multi-SDT procedure relates to the consequence that the whole procedure can last much longer than the single-SDT transmission procedure. In particular, the multi-SDT transmission procedure may involve the transmission of several subsequent UL grants after the first UL SDT transmission (see also Fig. 13 and 14). This is likely to substantially prolong the multi-SDT procedure, e.g. when compared to the above-discussed single-SDT transmission procedure. One possible problem in relation therewith is that the UE may move to another cell during this multi-SDT procedure (which is also possible but much less likely for the single-SDT procedure). In such an exemplary scenario, several problems can arise. For instance, the radio resources granted by the old serving gNB cannot be used anymore by the UE when camping at the new serving gNB. Further, the UE may not be able to ascertain whether previously-transmitted UL data was correctly received by the old serving gNB. In said case, some UL data may still remain the HARQ buffer.

The inventors have identified the above-discussed potential drawbacks and challenges, where one or more of them could best be solved when implementing a multi-SDT procedure.

The inventors have thus identified the possibility of providing an improved small-data transmission procedure that allows avoiding or mitigating one or more of the above-identified problems. The present invention relates to different solutions and variants for such an improved small-data transmission procedure.

### Embodiments

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner.

These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The term "**small data**" used in the application is to be broadly understood as data that the UE and the base station agree on being small, e.g. versus non-small. For instance, whether data is to be considered small-data or not, can e.g. be defined by a base station by setting a data amount threshold. Alternatively, what constitutes small-data can be defined by a telecom standard, e.g. by setting a data amount threshold.

The term "**inactive state**" used in the application is to be broadly understood as a state in which regular and extensive data exchange between the UE and the base station is not possible or not common. For instance, the UE, when in inactive state, (e.g. called "inactive UE") may not have actively-used data connections, but still has one or more inactive data connections (e.g. could also be called existent but not currently-used) that allow a (small) data transmission without the need to resume the data connection first. For sake of completion, the UE in **the idle state** does not have data connections over which the UE could transmit data to the base station, while the UE in **connected state** has one or more active data connections that can be immediately used to carry data to the base station.

The term "**monitoring**" can be broadly understood as trying to decode a possible candidate for receiving a DCI message, e.g. based on a particular format, or put more simply as trying to decode a DCI message. Such a decoding attempt can also be called blind decoding. A DCI message can be broadly understood e.g. as a resource assignment message for uplink or downlink radio resources. Correspondingly, the term "**monitoring function**" can be broadly understood in this context as relating to the corresponding function performed by the UE for trying to decode a DCI message.

Moreover, the "monitoring function" can be performed by the UE for various reasons, e.g. when expecting a response from the base station, such as during the RACH procedure when expecting Msg2 or Msg4 or MsgB. The monitoring function can be then continued or extended by the UE so as to be able to receive a further message or resource assignment from the base station.

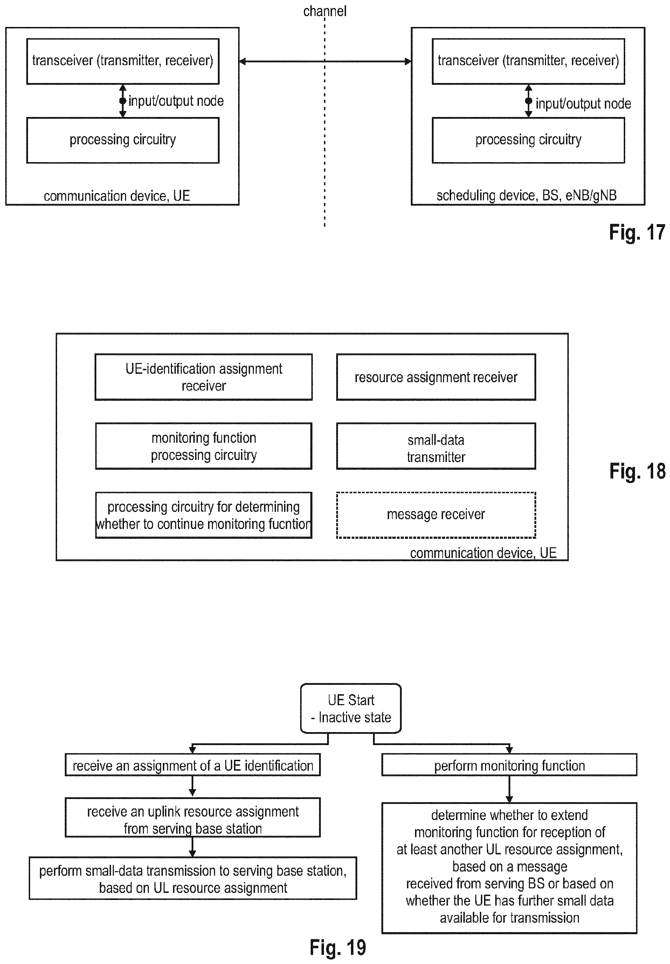

**Fig. 17** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

An improved small-data transmission procedure will be described in the following. In said connection, an improved UE and an improved base station are presented, which participate in the improved small-data transmission procedure. Corresponding methods for the UE behavior and the base station behavior are provided as well.

**Fig. 18** illustrates a simplified and exemplary UE structure according to one exemplary solution of the improved small-data transmission procedure, which can be implemented based on the general UE structure explained in connection with Fig. 17. The various structural elements of the UE illustrated in said figure can be interconnected between one another e.g. with corresponding input/output nodes (not shown) e.g. in order to exchange control and user data and other signals. Although not shown for illustration purposes, the UE may include further structural elements.

As apparent from **Fig. 18**, the UE may include a UE-identification assignment receiver, a resource assignment receiver, a monitoring function processing circuitry, a small-data transmitter, a processing circuitry for determining whether to extend the monitoring function, and optionally a message receiver.

In the present case as will become apparent from the below disclosure, the receiver of the UE can thus be exemplarily configured to at least partly perform one or more of receiving the assignment of the UE identification, receiving resource assignments, receiving downlink transmissions, receiving messages of a RACH procedure, etc.

Furthermore, in the present case as will become apparent from the below disclosure, the processing circuitry (also termed processor) of the UE can thus be exemplarily configured to at least partly perform one or more of performing a monitoring function, of determining whether to extend the monitoring function, of operating timers and a counter, etc.

Furthermore, in the present case as will become apparent from the below disclosure, the transmitter of the UE can thus be exemplarily configured to at least partly perform one or more of transmitting small data, transmitting messages of a RACH procedure performed with the serving base station, transmitting a buffer status report (e.g. BSR MAC CE), etc.

One exemplary solution as will be disclosed in more detail further below is implemented by a UE that includes the following. A receiver of the UE receives an assignment of a UE identification from a base station that is currently serving the UE. The UE is in an inactive state out of a connected state, an idle state and the inactive state. The UE identification is usable by the inactive UE to perform a monitoring function for reception of resource assignments, at least including uplink resource assignments, transmitted from the serving base station. The receiver receives an uplink resource assignment transmitted from the serving base station, based on the UE identification. The received uplink resource assignment assigns radio resources usable by the inactive UE for the transmission of small data. A transmitter of the UE performs transmission of the small data to the serving base station, based on the received uplink resource assignment. A processor determines whether to extend the monitoring function for reception of at least another uplink resource assignment based on the UE identification, wherein the determination is based on a message received from the serving base station or based on whether the UE has further small data available for transmission.

A corresponding sequence diagram for an exemplary UE behavior in line with the above-discussed UE is defined in the following and illustrated in **Fig. 19****.** The method comprises the following steps performed by a user equipment:
- receiving an assignment of a UE identification from a base station that is currently serving the UE, wherein the UE is in an inactive state out of a connected state, an idle state and the inactive state, and wherein the UE identification is usable by the inactive UE to perform a monitoring function for reception of resource assignments, at least including uplink resource assignments, transmitted from the serving base station,
- receiving an uplink resource assignment transmitted from the serving base station, based on the UE identification, wherein the received uplink resource assignment assigns radio resources usable by the inactive UE for the transmission of small data,
- performing transmission of the small data to the serving base station, based on the received uplink resource assignment,
- determining whether to extend the monitoring function for reception of at least another uplink resource assignment based on the UE identification, wherein the determination is based on a message received from the serving base station or based on whether the UE has further small data available for transmission.

According to this improved small-data transmission procedure, it is possible to extend the monitoring of the UE so as to be able to receive further uplink resource assignments and thus allow further uplink (small) data transmissions. The UE further uses the previously-assigned UE identification for performing the monitoring function, the UE identification being used by the serving base station to address the uplink resource assignments to the UE. Furthermore, whether or not the monitoring function is extended by the UE can also be controlled by the serving base station, by using the message that is transmitted to the UE for said purpose.

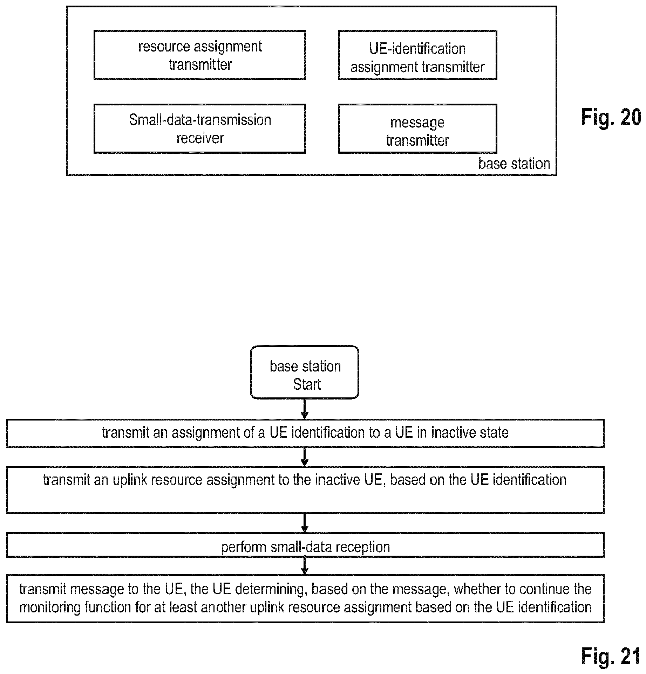

As already apparent from above, the improved small-data transmission procedure also provides an improved radio base station. **Fig. 20** illustrates a simplified and exemplary base station structure according to one exemplary solution of the improved small-data transmission procedure, and can be implemented based on the general base station structure explained in connection with Fig. 17. The various structural elements of the radio base station illustrated in said Fig. 20 can be interconnected between one another e.g. with corresponding input/output nodes (not shown) e.g. in order to exchange control and user data and other signals. Although not shown for illustration purposes, the base station may include further structural elements.

As apparent from Fig. 20, the base station may include a resource assignment transmitter, a UE-identification assignment transmitter, a small-data-transmission receiver, and a message transmitter.

In the present case as will become apparent from the below disclosure, the receiver of the base station can thus be exemplarily configured to at least partly perform one or more of receiving small data from the UE, of receiving messages of RACH procedure performed with the UE, of receiving RRC messages from the UE, of receiving a buffer status report (e.g. BSR MAC CE) from the UE etc.

In the present case as will become apparent from the below disclosure, the processing circuitry of the base station can thus be exemplarily configured to at least partly perform one or more of operating timers and a counter, of determining whether to transmit an uplink resource assignment to the UE, etc.

In the present case as will become apparent from the below disclosure, the transmitter of the base station can thus be exemplarily configured to at least partly perform one or more of transmitting a UE-identification assignment message to the UE, transmitting a message to the UE, transmitting messages of a RACH procedure performed with the UE, transmitting an uplink resource assignment to the UE, etc.

One exemplary solution as will be disclosed in more detail further below is implemented by a radio base station that includes the following. A transmitter of the base station transmits an assignment of a UE identification to a user equipment currently being served by the base station. The UE is in an inactive state out of a connected state, an idle state and the inactive state, and the UE identification is usable by the base station to transmit resource assignments, at least including uplink resource assignments, to the UE. The transmitter transmits an uplink resource assignment to the inactive UE, based on the UE identification. The transmitted uplink resource assignment assigns radio resources usable by the inactive UE for the transmission of small data. The transmitted uplink resource assignment is receivable by the inactive UE based on the inactive UE performing a monitoring function for reception of resource assignments based on the assigned UE identification. A receiver performs reception of the small data from the inactive UE, based on the transmitted uplink resource assignment. The transmitter transmits, to the inactive UE, a message, based on which the inactive UE determines whether to extend the monitoring function for reception of at least another uplink resource assignment based on the UE identification.

A corresponding sequence diagram for an exemplary base station behavior in line with the above-discussed base station is illustrated in **Fig. 21****.** A corresponding method comprises the following steps performed by a base station:
- transmitting an assignment of a UE identification to a user equipment currently being served by the base station, wherein the UE is in an inactive state out of a connected state, an idle state and the inactive state, and wherein the UE identification is usable by the base station to transmit resource assignments, at least including uplink resource assignments, to the UE,
- transmitting an uplink resource assignment to the inactive UE, based on the UE identification, wherein the transmitted uplink resource assignment assigns radio resources usable by the inactive UE for the transmission of small data, wherein the transmitted uplink resource assignment is receivable by the inactive UE based on the inactive UE performing a monitoring function for reception of resource assignments based on the assigned UE identification,
- performing reception of the small data from the inactive UE, based on the transmitted uplink resource assignment,
- transmitting, to the inactive UE, a message, based on which the inactive UE determines whether to extend the monitoring function for reception of at least another uplink resource assignment based on the UE identification.

Correspondingly, the improved base station participates in the improved small-data transmission procedure so as to facilitate that the UE extends its monitoring time and thus is able to receive several uplink resource assignments and to perform corresponding uplink small data transmissions based on these uplink resource assignments.

In the following, different exemplary implementations will be disclosed on how to implement the above-presented improved small-data transmission procedure.

For the following solutions it is assumed that the improved small-data transmission procedure builds on the RACH procedure so as to provide the first small-data transmission and to then define UE-behavior allowing further small-data transmissions.

Moreover, it is also this RACH procedure which involves that the serving base station assigns a UE identification to the UE, which then can be used to enable the small-data transmissions; e.g. the UE receives uplink resource assignments, assigning radio resources that are usable by the UE to perform the uplink small-data transmissions. In 5G-NR standard compliant variants of the solutions, the UE identification can be the C-RNTI, which is assigned to the UE (at first in a temporary fashion) based on Msg2 or MsgB. For instance, a 5G-NR-compliant variant could transmit the small data and the BSR MAC CE as part of the RACH procedure explained in the corresponding section "Random Access procedure" above. The various solutions (and possible variants) may be applicable for both a 4-step and a 2-step RACH procedure.

### First solution

According to a first solution of the improved small-data transmission procedure (and variants and implementations thereof), the serving base station can use resource assignments to allow the UE to perform several uplink small-data transmissions. Correspondingly, the above-discussed message, based on which the UE determines whether to extend (may also be termed continue) the monitoring function for reception of at least another uplink resource assignment, is an uplink resource assignment transmitted from the serving base station to the inactive UE.

Then, upon receiving an uplink resource assignment, the UE determines that it is to expect even a further uplink resource assignment. Correspondingly, the inactive UE determines to extend the monitoring function, upon receiving said uplink resource assignment, so as to be able to receive the next uplink resource assignment.

As presented above, the UE performs the determination of whether or not to extend the monitoring function based on the reception of the uplink resource assignment. Alternatively, instead of using the reception of the uplink resource assignment, the subsequently-performed small-data transmission can be used. Thus, for instance, upon performing the uplink small-data transmission based on the previously-received uplink resource assignment, the UE determines that it should extend the monitoring function so as to be able to receive the next uplink resource assignment.

According to a further exemplary variant, the determination on whether the UE should extend the monitoring function can additionally or alternatively take into account whether there is any uplink data remaining in UE's buffer. For instance, the UE determines to extend the monitoring function if there is uplink small data remaining in the UE's buffer (e.g. if the buffer status report is sent together or not together with the small-data transmission using the radio resources indicated by the previously received uplink resource assignment). On the other hand, the UE determines to not extend the monitoring function if there is no further uplink small data remaining in the UE's buffer (e.g. if the buffer status report is not sent or if the sent buffer status report indicates no further data).

The monitoring function performed by the inactive UE is based on a UE identification (such as the C-RNTI) to which the (uplink or downlink) resource assignments can be addressed by the serving base station. The UE identification is typically assigned by the serving base station to the inactive UE on a temporary basis, i.e. not permanently, for a specific purpose, such as for receiving the Msg4 of the RACH procedure. The UE identification can be kept alive as long as needed, otherwise it is discarded by the UE (and possibly reassigned to another UE by the serving base station).

According to the improved small-data transmission procedure, the UE identification is controlled by the UE such that the UE identification is kept usable for the purpose of receiving the multiple uplink resource assignments (and thus allowing the multiple small-data transmissions by the inactive UE). Two exemplary variants on how this can be implemented will be presented in the following, differing between each other by either using one or two timers in said respect.

According to a first variant, one timer is primarily used by the UE to control for how long the UE identification is kept valid (could be also termed: alive), before possibly discarding it. For instance, the UE identification is assigned to the UE by the RAR of the RACH procedure. For example, the timer is started when the UE transmits the connection resume request during the RACH procedure. The timer is used for the connection resume request procedure and allows determining that the connection resume request procedure was not successful when the timer expires, because no corresponding response (e.g. RRCRelease) was received from the serving base station in response to the connection resume request message. The discarded UE identification thus cannot be used anymore for receiving any further uplink or downlink resource assignment. The reception of the RRCRelease message from the serving base station, results in that the timer is stopped and that the UE stays in the inactive state, which in turn involves discarding the UE identification. Similarly, in case the timer expires, i.e. neither a response to the connection resume request nor an uplink resource assignment was received by the serving base station, the UE determines that the connection resume request was not successful and then proceeds to enter the idle state. Entering the idle state also involves that the UE discards the UE identification. The discarded UE identification thus cannot be used anymore for receiving any further uplink or downlink resource assignments.

According to one exemplary implementation that is in line with the current 5G-NR standards, the timer is the T319 timer, which is started when the inactive UE transmits the Msg3 or Msg4 of the RACH procedure. However, since the 5G-NR UE only needs to monitor for the downlink RRC message (i.e., RRC Release/Resume/Reject message) while T319 timer is running, UE's behavior in this exemplary implementation needs to be changed so as to also monitor the uplink resource assignment while T319 timer is running.

According to this first variant of the improved small-data transmission procedure, the timer is then restarted upon receiving the uplink resource assignment, thereby extending the life-time (or validity) of the UE-identification and extending the usability of the UE-identification in the context of monitoring the downlink control channel for further resource assignments transmitted by the serving base station addressed to this UE identification. Moreover, the discarding of the UE identification occurs upon the timer expiring.

According to the second variant of the improved small-data transmission procedure, the first timer is used for controlling the time required for the connection resume request procedure. In addition, a second timer is operated by the UE, dedicated to extending the lifetime (validity) of the UE identification. This second timer is started for the first time upon receiving a first uplink resource assignment from the serving base station and is then restarted subsequently each time upon receiving a further uplink resource assignment from the serving base station. The UE identification is then kept alive as long as either one of the first and second timer are running, but is discarded when both the first timer and the second timers are no longer running (e.g. have expired or have been stopped).

According to one exemplary implementation that is in line with the current 5G-NR standards, the timer of the first variant and the first timer of the second variant is the T319 timer, which is started when the inactive UE transmits the Msg3 or MsgA of the RACH procedure, which contains the RRCResumeRequest message.

As explained above for the first and second variants of the first solution, it is possible to keep the UE identification alive as needed for performing the monitoring function by the UE so as to be able to then perform several small-data transmissions.

According to one variant of the first solution, the improved small-data transmission procedure is then completed with the response message of the connection resume request procedure. For instance, the UE initiated the connection resume request procedure during the RACH procedure by transmitting the connection resume request (e.g. the RRCResumeRequest message). In response, the connection resume request procedure is completed by receiving the corresponding response message (such as the RRCRelease message). This response message may also indicate the UE-state in which the UE should be, e.g. instructing the UE to stay in the inactive state. As already mentioned above, the completion of the connection resume request message results in that the UE identification is discarded. Correspondingly, upon receiving the response message (indicating the UE-state), the UE identification is discarded by the UE.

Similarly, the UE may for example also stop the monitoring function upon receiving the response message (indicating the UE state), assuming that no further resource assignments will be transmitted by the serving base station.

According to the above two variants, the UE performs the determination of whether or not to restart the timer (e.g. the one timer of the first variant, and the second timer of the second variant) based on the reception of the uplink resource assignment. Alternatively, instead of using the reception of the uplink resource assignment, the subsequently-performed small-data transmission can be used as the trigger. Thus, for instance, upon performing the uplink small-data transmission based on the previously-received uplink resource assignment, the UE restarts the respective timer, as discussed for the above first and second variants, so as to keep the UE identification valid longer and thus to avoid its premature discard.

According to a further exemplary variant, the determination on whether the UE should restart the respective timer can also additionally or alternatively take into account whether there is any uplink data remaining in UE's buffer. For instance, the UE determines to restart the respective timer if there is uplink small data remaining in the UE's buffer (e.g. if the buffer status report is sent together or not together with the small-data transmission). On the other hand, the UE determines to not restart the respective timer if there is no further uplink small data remaining in the UE's buffer (e.g. if the buffer status report is not sent or if the send buffer status report indicates no further data).

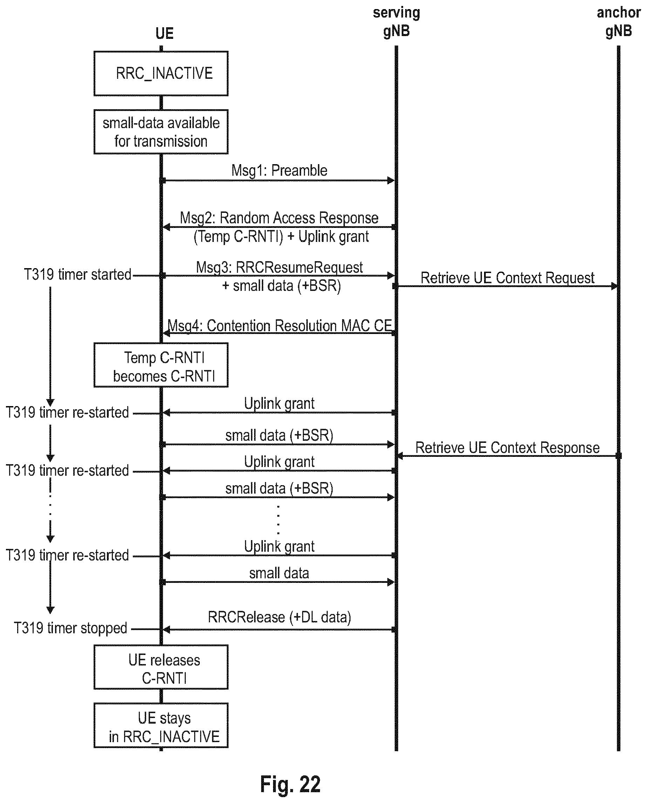

Different exemplary implementations of the first solution, in accordance with the above-discussed variants of this first solution, are illustrated in Fig. 22, 23 and 24.

**Fig. 22** illustrates in an exemplary and simplified manner the message exchange between the UE and the serving gNB according to the first variant (one timer is used) of the first solution. The exemplary implementation according to Fig. 22 makes similar exemplary assumptions as explained for the implementation of Fig. 16. For instance it is exemplarily assumed that a 4-step random access procedure is initiated by the UE for the small-data transmissions. It is furthermore exemplarily assumed that the UE context of the UE resides at the anchor gNB, while the UE is currently camping at its serving gNB, such that the serving gNB needs to retrieve the UE context from the anchor gNB so as to perform authentication of the UE.

As apparent from Fig. 22, the T319 timer is restarted every time an uplink grant, addressed to the C-RNTI, is received by the UE.

Furthermore, for instance, the UE transmits a buffer status report (e.g. together with small data) in order to inform the serving gNB about further data being available for transmission. Correspondingly, based on the received buffer status report, the serving gNB can decide to provide further uplink grants to the UE for the small data remaining in the UE buffer. This procedure can be repeated until no more further small data remains in the UE buffer. For instance, in that case the UE would not transmit a buffer status report with the small data, or if transmitting a buffer status report, the buffer status report would appropriately indicate that no further small date is available for transmission.

The gNB can then decide to transmit the RRCRelease message to the UE, thereby indicating to the UE to stay in the inactive state. The T319 timer at the UE is stopped, upon the reception of the RRC release message which also leads to discard of the C-RNTI.

As illustrated in Fig. 22, the serving gNB, upon receiving the RRCResumeRequest message from the inactive UE, proceeds to retrieve the UE context from the anchor gNB and eventually retrieves same. Nonetheless, the RRCRelease message need not be transmitted immediately by the serving gNB, but the gNB can rather proceed by transmitting further uplink grants to the UE to allow for multiple small-data transmissions. This has the advantage that uplink small-data transmissions can be performed by the UE as necessary to transmit the small data that is available for transmission at the UE (and as indicated to the serving gNB).

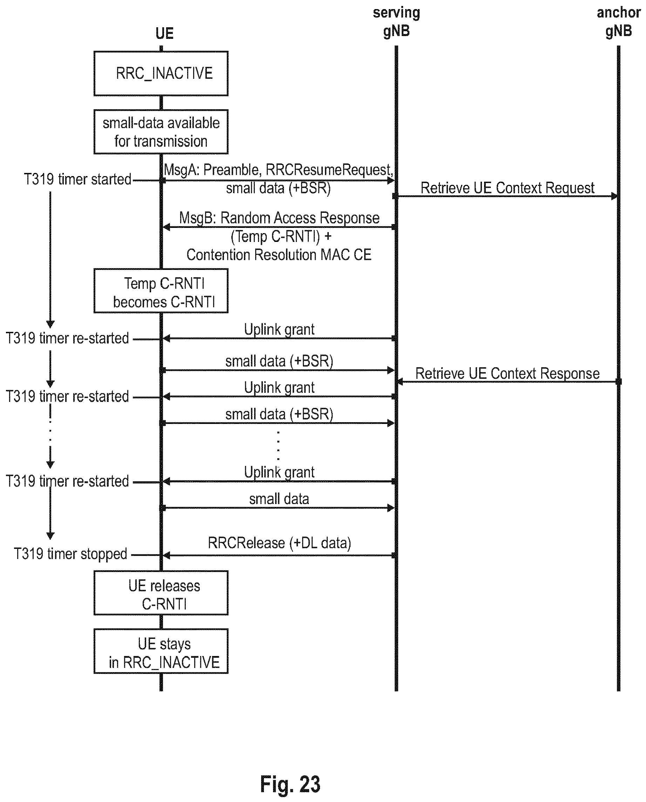

**Fig. 23** illustrates in an exemplary and simplified manner the message exchange between the UE and the serving gNB according to the first variant (one timer is used) of the first solution, however assuming a 2-step RACH procedure rather than a 4-step RACH procedure. In any case, the procedure of Fig. 23 is mostly the same as the one from Fig. 22, with the differences resulting from using the 2-step RACH procedure, i.e. MsgA and MsgB are transmitted respectively instead of Msg1 to Msg4. Importantly, however, as explained in detail above for Fig. 22, the timer T319 is restarted by the inactive UE each time upon receiving an uplink grant, addressed to the UE-identification (C-RNTI).

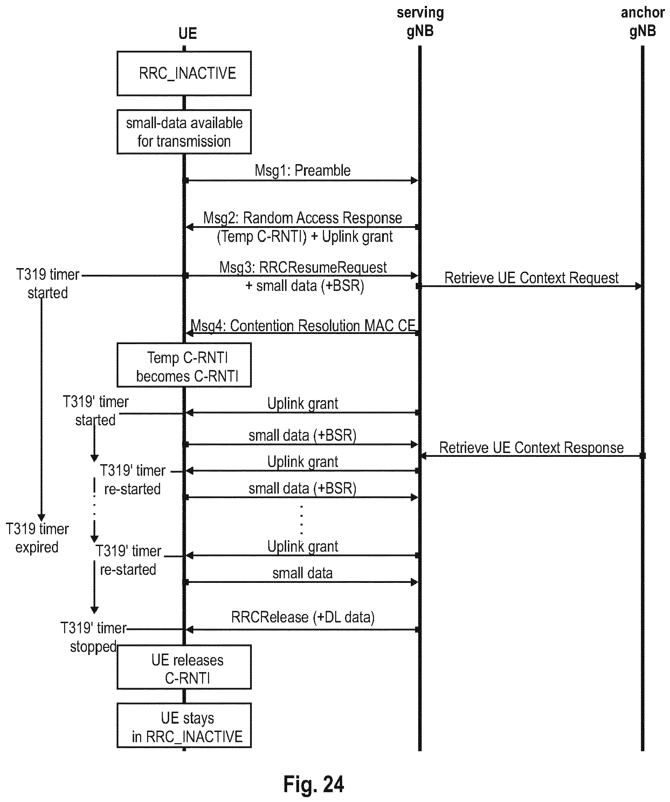

**Fig. 24** illustrates in an exemplary and simplified manner the message exchange between the UE and the serving gNB according to the second variant (two timers are used) of the first solution. Similar assumptions are made as for Fig. 22. The first timer is implemented as the T319 timer, wherein the second timer is a new timer (exemplarily called T319') operated for the purpose of controlling the validity of the UE identification (e.g. C-RNTI). Moreover, as generally explained above for the second variant, the UE identification is not discarded while one of the two timers is still running; rather, the discard of the UE identification is performed by the UE when both the timers (T319 and T319') are not running (e.g. have expired or stopped).

According to this second variant, the first timer T319 is started by the UE when transmitting the connection resume request message (e.g. the RRCResumeRequest message). On the other hand, the new timer T319' is started when receiving the first uplink grant message from the serving gNB, addressed to the C-RNTI of the UE. Furthermore, the new timer T319' is then restarted every time a further uplink grant is received by the UE.

Upon expiry of the first timer T319, the UE-identification is not yet discarded, assuming that the new timer T319' has already started before (due to the reception of the uplink grant, transmitted by the serving base station in a timely manner before expiry of the first timer T319).

The new timer T319' is stopped by the UE when receiving the response message (e.g. the RRCRelease) to the connection resume request message previously transmitted by the UE.

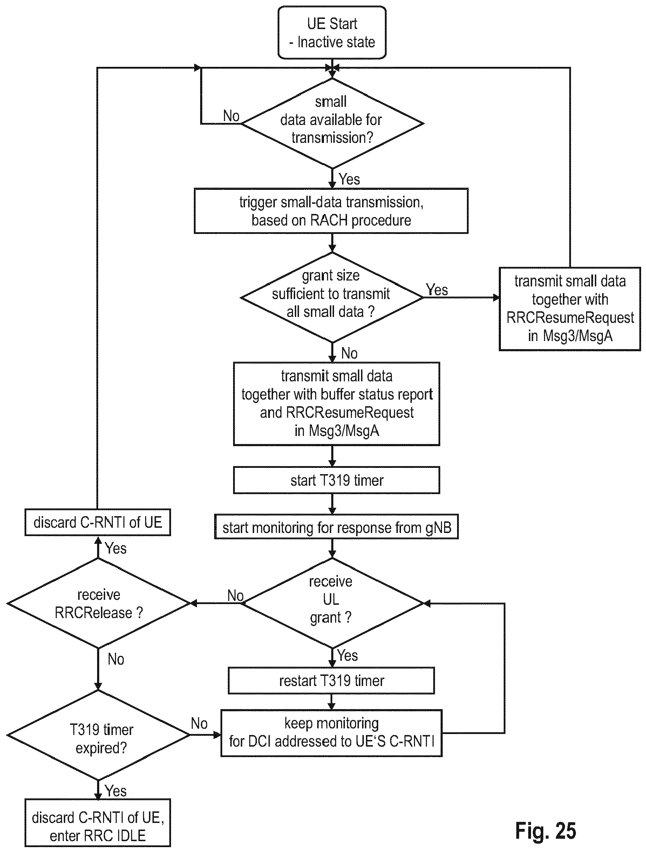

**Fig. 25** is a flow diagram illustrating an exemplary and simplified implementation of the UE-behavior for the improved small-data transmission procedure according to the first variant of the first solution. Accordingly, it is assumed that one timer T319 is used by the UE, which controls the UE-identification validity.

Generally, according to one example, the UE behavior includes a determination on whether to transmit a buffer status report or not to the serving gNB. A buffer status report could be sent in case that, after the small-data transmission, further small data would be available for transmission, such that the buffer status report would indicate said remaining small data. A buffer status report would not be sent in case that all small data can be transmitted.

This is exemplarily reflected in the UE behavior of Fig. 25, according to which the UE determines whether to transmit the small data and the connection resume request message with our without a buffer status report, based on whether the grant size (provided by the random access response message) is sufficient to transmit all the available small data. If the grant size is sufficient (e.g. if no further small data remains available for transmission), the UE does not transmit a buffer status report, but transmits the small data together with the RRCResumeRequest message in the Msg3 or MsgA of the RACH procedure. Conversely, if the grant size is not sufficient (e.g. if further small data remains available for transmission), the UE does transmit the buffer status report together with the small data and the RRCResumeRequest message in Msg3 or MsgA of the RACH procedure.

The UE then starts the T319 timer and starts performing the monitoring function to be able to receive the response from the gNB. Upon receiving an UL grant, the UE restarts the T319 timer and keeps monitoring for another uplink grant (e.g. DCI) addressed to the UE's C-RNTI.

Moreover, the discard of the UE identification (C-RNTI) occurs when the timer T319 expires, after no UL grant is received, and also occurs when the RRCRelease message is received.

The UE may also keep performing the monitoring function as long as the T319 timer has not expired.

Moreover, in the following, an exemplary and simplified implementation of the behavior of the gNB for the first solution of this improved small-data transmission procedure will be discussed.

For instance, the gNB participates in the RACH procedure initiated by the UE for the small-data transmission. Moreover, the gNB is responsible for determining whether the single small-data transmission during the RACH procedure (see e.g. Msg3 or MsgA) is sufficient for having transmitted all available small data or not. Thus, in case further small-data transmissions are necessary (e.g. as indicated by a suitable buffer status report), the serving gNB is responsible for transmitting one or more UL grants to the UE in a timely manner (e.g. before expiry of a respective timer).

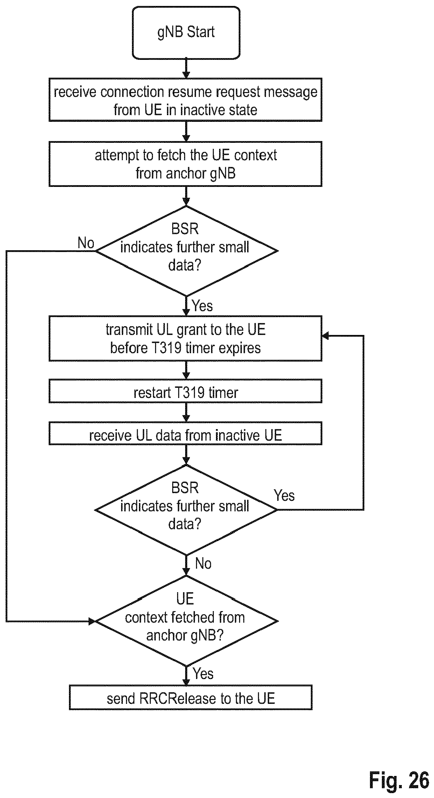

**Fig. 26** is a flow diagram illustrating an exemplary and simplified implementation of the behavior of the serving base station for the improved small-data transmission procedure according to the first variant of the first solution (i.e. using one timer only). As apparent therefrom, the gNB receives the connection resume request message from the inactive UE and in response attempts to fetch the UE context of said UE from the anchor gNB. Although not illustrated, the gNB will receive as part of the RACH procedure a first transmission of small data, and possibly receive a buffer status report indicating whether further small data is available for transmission or not. In case the UE shall be able to perform further small-data transmission, the gNB performs steps that involve transmitting a suitable UL grant to the UE before the T319 timer expires (otherwise, if T319 timer already expired, it is too late because UE will have discarded the C-RNTI and will not monitor for a UL grant), restarting the T319 timer and then receiving the UL data from the UE (in accordance with the previous grant).

The gNB can then again check whether the UE indicates that further small data is available for transmission. This loop can be e.g. performed until all small data has been transmitted by the UE.

In case no further small-data is available for transmission, the gNB can proceed to transmit the RRCRelease message to the UE, e.g. after having successfully received the UE context from the anchor gNB.

As discussed above, the UE continues with (i.e. extends) the monitoring function in order to receive further uplink resource assignments so as to then be able to perform one or more additional uplink small-data transmissions. On the other hand, according to further variants of the first solution, the monitoring may also involve receiving downlink resource assignments and then receive the subsequent downlink (small) data transmissions by the serving gNB (based on the previously-received downlink resource assignments, respectively). For instance, the reception of such a downlink resource assignment (or alternatively the subsequent reception of the DL small-data transmission) triggers the UE to extend the monitoring period, and may also trigger the UE to keep the UE identification alive longer (e.g. restarting the one timer of the first variant, or the restarting the second timer of the second variant discussed respectively above).

As discussed above, the improved small-data transmission procedure allows to perform at least some of the small-data transmissions at a very early time. For instance, without having to wait for retrieving the UE Context from the anchor gNB, the serving gNB can already issue to the UE at least some uplink resource assignments for further small-data transmissions. Particularly, as soon as the contention is resolved, and the corresponding contention resolution is communicated to the UE, the serving base station can proceed to provide the next uplink grant to the UE, such that the inactive UE can transmit the UL small data.

One possible disadvantage is that some early UL grants might be transmitted before the serving gNB authenticates the inactive UE (e.g. based on the requested UE context). Therefore, radio resources granted before authentication might be wasted in case the UE is finally not positively authenticated by the serving gNB. Moreover, by allowing the UE to transmit the UL small data to the serving gNB before authentication, the serving gNB exposes itself to a possible malicious UE attack.

### Second Solution

According to the second solution of the improved small-data transmission procedure (and variants and implementations thereof), the serving base station uses a response message to the connection resume request message for indicating to the UE to extend the monitoring function and continue with the transmission of small data. Correspondingly, the above discussed message, based on which the UE determines whether to extend the monitoring function for reception of at least another uplink resource assignment, is this response message (e.g. the RRCRelease message). This connection resume request response message also provides the UE with an indication on the state in which the UE should be, e.g. instructing the inactive UE to stay in the inactive state; thus, the message can be understood as a UE-state-indication message.

Correspondingly, this connection resume request response message may include an indication for the inactive UE on whether or not to extend the monitoring function. This monitoring indication could be for instance in the form of a flag, exemplarily called flag_subsequent. One value of the monitoring indication indicates the UE to monitor for subsequent uplink grants addressed to its UE identification, while another value of the monitoring indication indicates the UE to not monitor for subsequent uplink grants addressed to its UE identification.

The inactive UE will then follow the monitoring indication by extending or stopping the monitoring function as indicated.

There are several possibilities of how to control for how long the UE shall continue performing the monitoring function in accordance with the received monitoring indication.

According to a first exemplary variant of this second solution, the UE extends the monitoring function by a particular monitoring time, e.g. starting upon receiving the monitoring indication. The amount of extended monitoring time can be defined in different ways, e.g. based on information that is also received by the UE from the serving base station, e.g. together with the monitoring indication (e.g. in the RRCRelease message). In addition or alternatively, the amount of monitoring time can be defined before, for instance by a system information broadcast from the serving base station or by a previously received higher layer (e.g. RRC) configuration message from the current or a previous base station, or by a configuration stored in the Universal Subscriber Identity Module of the UE, or the amount of monitoring time is simply defined in the requirements of a 3GPP technical standard. For instance, the above can be exemplarily implemented by using a timer with the particular amount of time (exemplarily called timer_subsequent), and upon expiry of this timer, the UE may stop performing the monitoring function.

According to a second exemplary variant of this second solution, the UE continues until it reaches a particular number of UL grant receptions (or equivalently a particular number of small data transmissions) after having received the monitoring indication. When the UE has received the indicated number of UL grants, the UE stops performing the monitoring function. The particular number of UL grants can be defined in different ways, e.g. in the same ways already discussed for the monitoring time. More specifically, the number of uplink grants can be defined based on information that is also received by the UE from the serving base station, e.g. together with the monitoring indication (e.g. in the RRCRelease message). In addition or alternatively, the number of uplink grants can be defined before, for instance by a system information broadcast from the serving base station or by a previously received higher layer (e.g. RRC) configuration message from the current or a previous base station, or by a configuration stored in the Universal Subscriber Identity Module of the UE, or simply defined in the requirements of a 3GPP technical standard.

A further third exemplary variant of this second solution is based on a combination of the above-discussed first and second variants. In particular, the UE continues performing the monitoring function for a particular amount of time, e.g. starting upon receiving the monitoring indication (see first variant), and also counts the received UL grants (e.g. after receiving the monitoring indication) (see second variant). The UE may either stop performing the monitoring function when the amount of monitoring time expires or the UE may stop the monitoring function earlier when the number of the uplink grants that the UE has received is reached.

A further fourth exemplary variant of this second solution is based on the above-discussed first variant. In particular, the UE continues performing the monitoring function for a particular amount of monitoring time. Then, each time a corresponding UL grant is received (or alternative upon performing a small-data transmission based on a previously-received UL grant, or upon transmitting a buffer status report indicating that further small data is available for transmission at the UE), the UE restarts the monitoring time (e.g. restarts the corresponding timer). This allows flexibility in how often (or how long) the inactive UE can be instructed to perform an uplink small-data transmission, while at the same time allowing the possibility of keeping the minimum required monitoring time short.

The monitoring function performed by the inactive UE is based on the previously-assigned UE identification (such as the C-RNTI) to which the (uplink or downlink) resource assignments can be addressed by the serving base station (see e.g. discussion for first solution). The UE identification can thus be kept alive as long as needed, otherwise it is discarded by the UE (and possibly reassigned to another UE by the serving base station).

According to one exemplary implementation this indication in the received connection resume request response message has also a direct impact on how to control the validity of the UE-identification that is then used for providing the subsequent resource assignments to the UE. Generally, the validity and discard of the UE identification can be controlled based on the monitoring function, such that the UE determines to keep the UE identification when continuing performing the monitoring function, and the UE determines to discard the UE identification upon determining to stop performing the monitoring function.

For instance, the UE determines to discard the UE identification if the monitoring indication previously received in the connection resume request response message indicates to not extend the monitoring function. Compared to the prior art and the first solution, the UE identification is not necessarily discarded by the UE upon receiving the connection resume request response message (e.g. RRCRelease message). Rather, the UE identification is kept alive by the UE in case the indication indicates that the UE should extend the monitoring function, while the UE identification is discarded by the UE in case the indication indicates that the UE need not extend the monitoring function.

When the UE stops the monitoring function (e.g. based on one of the above discussed different variants), the UE may also proceed to discard the UE identification that is no longer needed.

In the above discussion of the second solution, it was generally described that the additional information for the second solution (e.g. the indication and in some variants also the timer value and counter value) are provided to the UE using the connection resume request response message. More specific implementations on how exactly this additional information can be carried by the connection resume request response message will be discussed in the following.

According to one possible implementation, all or part of the additional information is carried in the actual connection resume request response message, e.g. the RRCRelease message.

According to another second possible implementation, all or part of the additional information is carried together with the connection resume request response message, but not within same. For instance, all or part of the additional information could be included in a MAC Control Element that is attached to the connection resume request response message.

According to another third possible implementation, all or part of the additional information is carried in the downlink resource assignment that indicates the radio resources for receiving the actual connection resume request response message.

According to further implementations, the additional information is provided to the UE based on a combination of two or more of the above discussed three implementations.

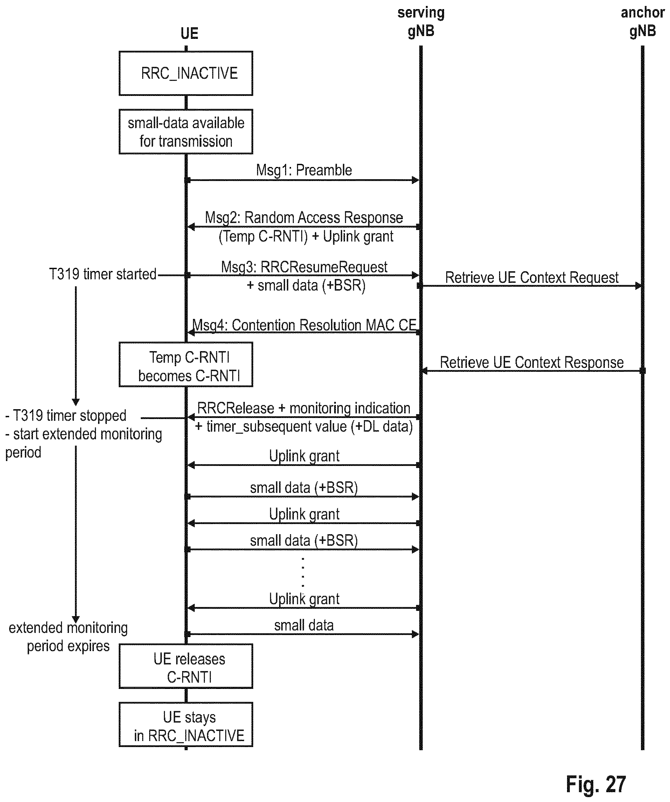

**Fig. 27** illustrates in an exemplary and simplified manner the message exchange between the UE and the serving gNB according to an exemplary implementation of the second solution. The exemplary implementation according to Fig. 27 makes similar exemplary assumptions as explained for the implementation of Fig. 16 (or for Fig. 22). For instance, it is exemplarily assumed that a 4-step random access procedure is initiated by the UE for the small-data transmissions. It is furthermore exemplarily assumed that the UE context of the UE resides at the anchor gNB, while the UE is currently camping at its serving gNB, such that the serving gNB needs to retrieve the UE context from the anchor gNB so as to perform authentication of the UE.

As apparent from Fig. 27, the RRCRelease message (i.e. the connection resume request response message) includes the monitoring indication explained above, upon reception of which the UE stops the T319 timer and extends the monitoring function (e.g. extends the monitoring period). This allows the UE the opportunity to receive further uplink grants and to then perform corresponding small-data transmissions in the uplink. For the present implementation as reflected in Fig. 27, it is exemplarily assumed that the RRCRelease message further includes information on the monitoring time period to be extended, in the form of a timer_subsequent value (see above first variant). Correspondingly, the UE determines from the RRCRelease message that it should extend its monitoring function for the indicated time.

During that indicated extended monitoring period, the serving gNB can schedule further uplink small data transmission as needed. When the extended monitoring period expires, the UE stops performing the monitoring function and discards the C-RNTI. The UE furthermore stays in the inactive state.

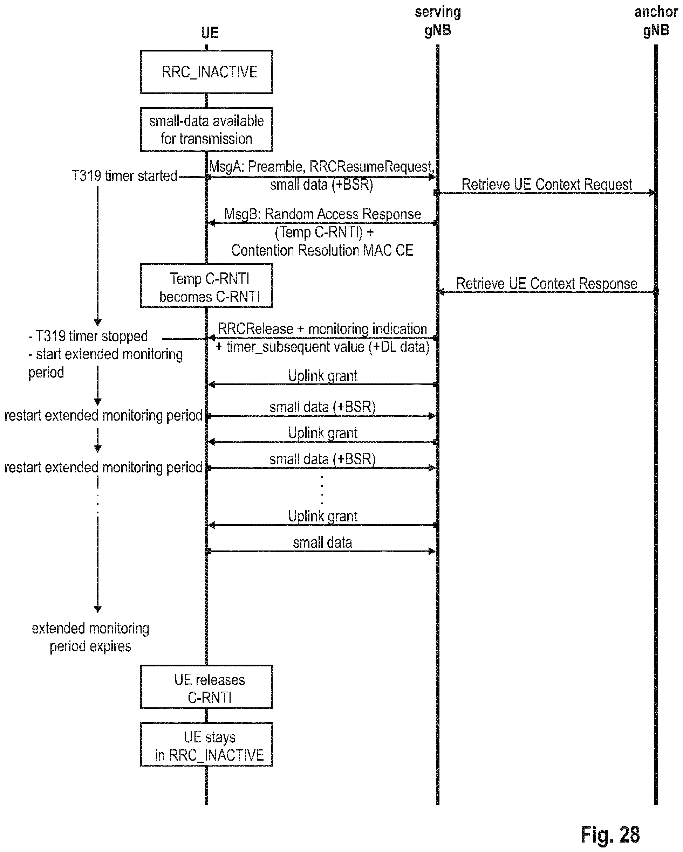

**Fig. 28** illustrates in an exemplary and simplified manner the message exchange between the UE and the serving gNB according to an exemplary implementation of the second solution, which differs from the implementation of Fig. 27 by adopting the 2-step RACH procedure and by extending the monitoring time period each time when performing a small-data transmission together with a buffer status report (see above fourth variant). As apparent from Fig. 28, and in the same manner as for Fig. 27, the RRCRelease message (i.e. the connection resume request response message) includes the monitoring indication as well as the information on the monitoring time period to be extended. On the other hand, the extended monitoring time period is then extended repeatedly by the inactive UE, namely each time it transmits small data together with a buffer status report. The UE does not extend the monitoring time when transmitting small data without a buffer status report; there is no need because the serving base station will not issue another uplink grant considering that no buffer status report was received from the UE.

According to a further exemplary variant of the second solution, an uplink grant can be directly provided to the UE in the connection resume request response message (e.g. the RRCRelease message). This allows that the UE transmits the first subsequent uplink small-data transmission, subsequent to the connection resume request response message, at an earlier time.

As discussed above, the UE continues with (i.e. extends) the monitoring function in order to receive further uplink resource assignments so as to then be able to perform uplink small-data transmissions. On the other hand, according to further variants of the second solution, the monitoring may also involve receiving downlink resource assignments and then receive the subsequent downlink (small) data transmissions by the serving gNB (based on the previously-received downlink resource assignments, respectively). For instance, the reception of such a downlink resource assignment (or alternatively the subsequent reception of the DL small-data transmission) may also trigger the UE to repeatedly extend the monitoring period.

According to the second solution presented above, the serving gNB uses the connection resume request response message (e.g. the RRCRelease message) to provide the necessary information for the UE to extend the monitoring function to implement the multi-small-data transmission procedure. Correspondingly, the connection resume request response message is transmitted by the serving gNB after having authenticated the UE (e.g. based on the UE context retrieved from the anchor gNB). The UL grants transmitted subsequent to the monitoring indication are only provided if the UE is authenticated. Thus, e.g. compared to the first solution, there is less risk that resources are wasted.

On the other hand, the second solution thus requires that the UE is first authenticated, thereby introducing a delay for the UL small-data transmissions performed by the UE.

### Third Solution

According to the third solution of the improved small-data transmission procedure (and variants and implementations thereof), the serving base station uses resource assignment messages to include a monitoring indication that indicates whether the UE shall extend or not the monitoring function.

Correspondingly, the above discussed message, based on which the UE determines whether to extend the monitoring function for reception of at least another uplink resource assignment, is a resource assignment message (e.g. for downlink or uplink, such as DCI message).

Correspondingly, this resource assignment message may include the monitoring indication for the inactive UE to determine whether or not to extend the monitoring function. This monitoring indication can be e.g. implemented in the same manner as for the second solution, e.g. could be for instance in the form of a flag, exemplarily called flag_subsequent. One value of the monitoring indication indicates the UE to monitor for subsequent uplink grants addressed to its UE identification (exemplarily called positive monitoring indication), while another value of the monitoring indication indicates the UE to not monitor for subsequent uplink grants addressed to its UE identification (exemplarily called it negative monitoring indication).

The inactive UE will then follow the monitoring indication by extending the monitoring function for a particular extended monitoring period or by stopping the monitoring function as indicated.

The resource assignment message can be repeatedly used by the serving gNB to instruct the UE to continue with the monitoring function. In that manner, the third solution is flexible on how long the UE shall continue extending the monitoring function in accordance with the repeated receptions of the monitoring indication.

According to one exemplary first variant, the UE continues with the monitoring function at least as long as the monitoring indication of the resource assignment indicates that it shall extend the monitoring function. When the UE receives a negative monitoring indication (i.e. to not extend the monitoring function), the UE will stop the monitoring function, unless it has to continue the monitoring function due to another reason, such as that the timer T319 is still running because the UE still has to monitor and possibly receive the connection resume request response message (e.g. RRCRelease message).

In addition or alternatively to the above first variant, the UE, according to another exemplary second variant, extends the monitoring function by a particular monitoring period when so being indicated by the monitoring indication. This amount of the extended monitoring period can be defined e.g. based on information already available at the UE. For instance, the amount of extended monitoring time can be defined before, for instance, by a system information broadcast from the serving base station or by a previously received higher layer (e.g. RRC) configuration message from the current or a previous base station, or by a configuration stored in the Universal Subscriber Identity Module of the UE, or defined in the requirements of a 3GPP technical standard.

This extended monitoring period is restarted every time when receiving a positive monitoring indication in a resource assignment from the serving gNB.

For instance, the above can be exemplarily implemented by using a new timer with the particular amount of time (exemplarily called T319'). This new timer T319' is started respectively restarted when receiving a positive monitoring indication in a resource assignment. This new timer T319' is stopped when receiving a negative monitoring indication indicating to the UE to stop the monitoring function. Finally, upon expiry of this T319' timer, the UE also stops performing the monitoring function.

The mechanism of this second variant can be used in addition to the mechanism of the above discussed first variant and thus e.g. avoids that the UE continues indefinitely with the monitoring function in case of missing a resource assignment with a negative monitoring indication.

The monitoring function performed by the inactive UE is based on the previously-assigned UE identification (such as the C-RNTI) to which the (uplink or downlink) resource assignments can be addressed by the serving base station (see e.g. discussion for first solution). The UE identification can thus be kept alive as long as needed, otherwise it is discarded by the UE (and possibly reassigned to another UE by the serving base station).

According to one exemplary implementation, the monitoring indication in the resource assignment messages has also a direct impact on how to control the validity of the UE-identification that is then used for providing the subsequent resource assignments to the UE. Generally, the validity and discard of the UE identification can be controlled based on the monitoring function, such that the UE determines to keep the UE identification when continuing performing the monitoring function, and the UE determines to discard the UE identification upon determining to stop performing the monitoring function.

For instance, the UE determines to discard the UE identification if receiving a negative monitoring indication indicating to not extend the monitoring function. Compared to the prior art and the first solution, the UE identification is not necessarily discarded by the UE upon receiving the connection resume request response message (e.g. RRCRelease message). Rather, the UE identification is kept alive by the UE in in accordance with the monitoring indication and the monitoring function.

When the UE stops the monitoring function (e.g. based on one of the above discussed different variants), the UE may also proceed to discard the UE identification that is no longer needed.

According to an exemplary implementation, the validity of the UE identification is controlled by using two timers. The first timer is used for controlling the time required for the connection resume request procedure. In addition, a second timer is operated by the UE, dedicated to extending the lifetime (validity) of the UE identification. This second timer is started for the first time upon receiving a first resource assignment with a positive monitoring indication from the serving base station and is then restarted subsequently each time upon receiving a positive monitoring indication in a resource assignment from the serving base station. The UE identification is then kept alive as long as either one of the first and second timers are running, but is discarded when both the first timer and the second timer are no longer running (e.g. have expired or have been stopped).

According to a 5G-NR-standard compliant implementation, the resource assignments carrying the monitoring indication can refer to either the uplink or downlink resource assignments and can be implemented using the DCI formats 0_1 or 0_2 for the uplink and the DCI formats 1_1 or 1_2 for the downlink.

By using a resource assignment as the message carrying the monitoring indication, instead of the connection resume request response message used in the above second solution, it is possible for the serving gNB to provide the monitoring indication to the UE independent of the retrieval of the UE context from the anchor gNB. In other words, the first resource assignment carrying the monitoring indication can be transmitted to the UE by the serving gNB before or after the UE context retrieval, e.g. before or after authenticating the inactive UE. Correspondingly, the serving gNB can decide on reducing the delay for possible uplink small data transmissions by sending the resource assignment with the monitoring indication before actually authenticating the UE, or the serving gNB may decide to reduce the risk of wasting radio resources on a fraudulent UE by sending the resource assignment with the monitoring indication after having positively authenticated the UE.

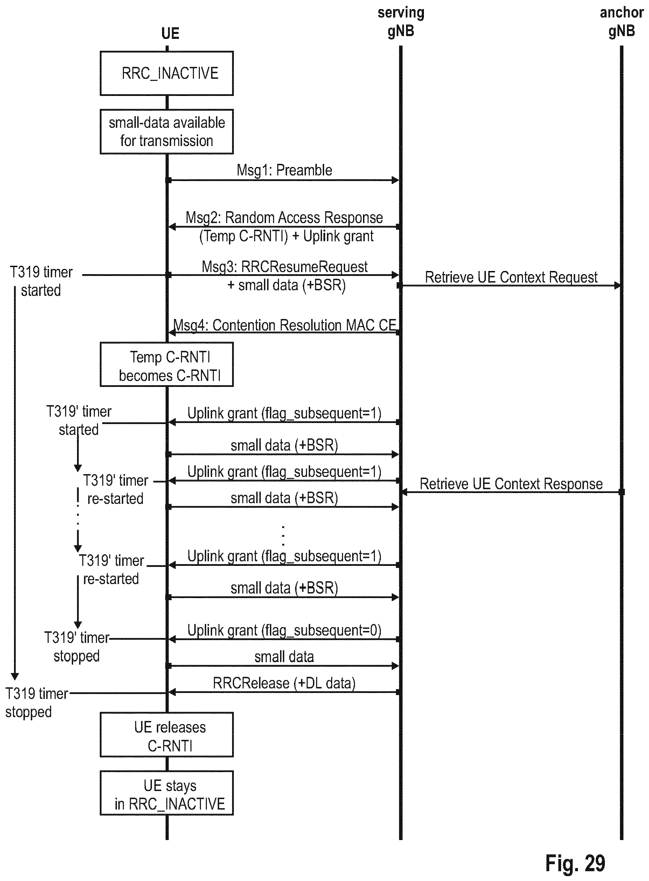

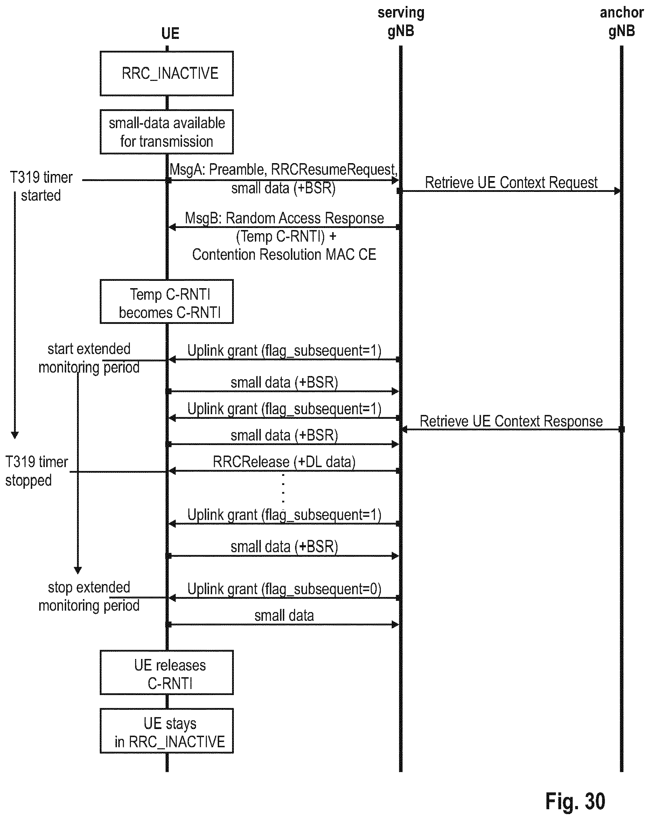

Fig. 29 and 30 reflect two different exemplarily implementations of the third solution. Fig. 29 illustrates in an exemplary and simplified manner the message exchange between the UE and the serving gNB according to an exemplary implementation of the third solution. Fig. 29 makes similar exemplary assumptions as explained for the implementation of Fig. 16 (or for Fig. 22, 27). For instance it is exemplarily assumed that a 4-step random access procedure is initiated by the UE for the small-data transmissions. It is furthermore exemplarily assumed that the UE context of the UE resides at the anchor gNB, while the UE is currently camping at its serving gNB, such that the serving gNB needs to retrieve the UE context from the anchor gNB so as to perform authentication of the UE.

As apparent from Fig. 29, the uplink grant comprises the monitoring indication (the flag_subsequent), which either indicates to the UE to extend the monitoring function (exemplarily in case of the value of flag_subsequent=1) or indicates to the UE to not extend the monitoring function (exemplarily in case of the value of flag_subsequent=0). The exemplary implementation of Fig. 29 is based on the above discussed use of the new timer T319' for controlling the validity of the UE identification (e.g. C-RNTI).

Correspondingly, as illustrated in Fig. 29, in case the UE receives a positive monitoring indication in an uplink grant, the new timer T319' is started respectively restarted and the UE then extends the monitoring function, thus being able to receive subsequent uplink grants and thus being able to perform the corresponding small-data transmissions. This exchange of uplink grants with a positive monitoring indication and the subsequence small data uplink transmissions can be repeatedly performed between the serving gNB and the UE.

As explained for previous solutions, the UE may indicate to the base station that further uplink small-data transmissions would be required e.g. by providing corresponding information in a buffer status report that is transmitted together (or not together) with the small data. Correspondingly, the serving gNB thus can decide whether or not to allocate further uplink radio resources to the inactive UE.

In the implementation of Fig. 29, it is exemplarily assumed that the serving gNB waits to transmit the RRCRelease message until after the uplink small-data transmissions are finished. Upon receiving the RRCRelease message, the inactive UE stops the first timer T319 and further discards the C-RNTI. In line with the instructed UE state of the RRCRelease message, the UE stays in the inactive state. Alternatively (as also reflected in the exemplary implementation according to Fig. 30), the serving gNB may transmit the RRC release message earlier, e.g. right after retrieving the UE context and positively authenticating the UE.

Fig. 30 illustrates in an exemplary and simplified manner the message exchange between the UE and the serving gNB according to another exemplary implementation of the third solution. It differs for instance from the implementation according to the above discussed Fig. 29 by using a 2-step RACH procedure, by an earlier transmission of the RRCRelease message from the serving base station, and by not using a new timer (starting and restarting same) but rather following the monitoring indications received in the corresponding uplink resource assignment (see also above discussed first variant).

Accordingly, the extended monitoring period is started by the UE when receiving a positive monitoring indication (illustrated as an uplink grant including flag_subsequent=1) and is stopped when receiving a negative monitoring indication (illustrated as an uplink grant including flag_subsequent=0).

Moreover, the serving gNB decides to transmit the RRCRelease message to the UE soon after having retrieved the UE context from the anchor gNB and having positively authenticated the UE. Upon receiving said RRCRelease message from the serving gNB, the UE stops the T319 timer but continues monitoring for further uplink grants from the serving base station, because of the previously received positive monitoring indication.

The small-data transmission procedure is concluded by the serving gNB transmitting a negative monitoring indication with the last uplink grant, upon which the UE stops the monitoring function and discards the C-RNTI. In line with the previously received RRC release message and the instructed UE state therein, the UE remains in the inactive state.

As discussed above, the UE continues with (i.e. extends) the monitoring function in order to receive further uplink resource assignments so as to then be able to perform uplink small-data transmissions. On the other hand, according to further variants of the third solution, the monitoring may also involve receiving downlink resource assignments (possibly with the monitoring indication) and then receive the subsequent downlink (small) data transmissions by the serving gNB (based on the previously-received downlink resource assignments, respectively). For instance, the reception of such a downlink resource assignment with the monitoring indication triggers the UE to extend or stop the monitoring period.

### Fourth Solution

According to the fourth solution of the improved small-data transmission procedure (and variants and implementations thereof), the UE independently controls when to extend the monitoring function so as to be able to receive possible further uplink resource assignments, particularly based on whether the UE determines that further small data remains available for transmission.

More specifically, when the UE determines that no further small data is available for transmission (e.g. when all small data could be transmitted in Msg3 or MsgA, or with a subsequent uplink small-data transmission), the UE does not need to extend the monitoring function for receiving further UL grants; although the UE could continue with the monitoring function so as to be able to receive the connection resume request response message (e.g. RRCRelease message) to be expected in response to the previously-transmitted connection resume request message (e.g. RRCResumeRequest message).

On the other hand, the UE extends the monitoring function when it determines that further small-data is available for transmission, e.g. when not all small data could be transmitted in the previous small-data transmission.

According to a further exemplary implementation of the fourth solution, the UE determines to transmit a buffer status report to the serving base station in a corresponding manner as determining whether or not to extend the monitoring function. In particular, the buffer status report is transmitted when there is still small data available for transmission. On the other hand, no buffer status report needs to be transmitted by the UE, in case no small data is available for transmission.

Correspondingly, the serving base station is aware of whether or not the UE has extended its monitoring function based on the reception, or non-reception, of the buffer status report. The serving base station can then still decide whether or not to transmit a corresponding uplink grant to the inactive UE.

For instance, the serving base station may decide to not transmit an uplink grant to the UE, although it receives the buffer status report from the UE indicating that further small data is available for transmission at the UE's buffer. In said case, the UE would continue with the monitoring function but would not receive any uplink grant from the base station.

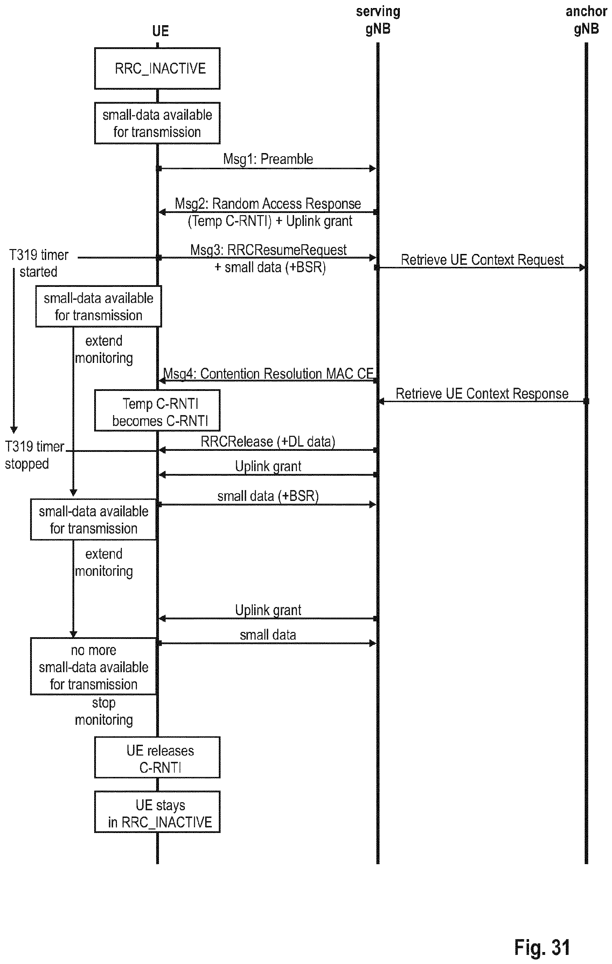

**Fig. 31** illustrates in an exemplary and simplified manner the message exchange between the UE and the serving gNB according to an exemplary implementation of the fourth solution. The exemplary implementation according to Fig. 31 makes similar exemplary assumptions as explained for the implementation of Fig. 16 (or for Fig. 22). For instance it is exemplarily assumed that a 4-step random access procedure is initiated by the UE for the small-data transmissions. It is furthermore exemplarily assumed that the UE context of the UE resides at the anchor gNB, while the UE is currently camping at its serving gNB, such that the serving gNB needs to retrieve the UE context from the anchor gNB so as to perform the authentication of the UE.

As apparent from Fig. 31, the extension of the monitoring function is controlled by the UE depending on whether or not small data is available for transmission. It is exemplarily assumed that after the first small-data transmission (together with buffer status report) using Msg3, the UE determines that small data is still available for transmission and thus continues with the monitoring function (which is anyway performed at that time by the UE in order to be able to receive the RRCRelease message). However, also after having received the RRC release message and having stopped the corresponding T319 timer, the UE continues with the monitoring function in view of that small data is still available for transmission. Correspondingly, the UE is able to receive the subsequent uplink grant and to perform the corresponding uplink small data transmission. Alternatively, the extension of the monitoring function is implemented in a way that T319 is restarted upon UE transmitting the buffer status report.

It is exemplarily assumed that also after that small-data transmission further small data remains available for transmission, the UE determines to again extend the monitoring function and also determines to transmit the buffer status report together with the small data to the serving base station.

The UE thus is able to receive further uplink grants from the serving base station and transmits the remaining small data to the serving base station. It is now exemplarily assumed that no further small data remains available for transmission at the UE, such that the UE stops the monitoring function and also does not transmit a buffer status report to the serving base station.

### Further Variants

Numerous solution, variants and implementations of the improved small-data transmission procedure have been described above. For instance, four different solutions (and respective variants thereof) have been described as to how the multi-small-data transmission procedure can be implemented.

In the described solutions and implementations of the improved small-data-transmission procedure, the UE is described to be in the inactive state (idle state and connected state were also mentioned). According to specific 5G-NR-compliant variants, the UE may be in the RRC_INACTIVE state (corresponds to the above discussed inactive state), the RRC_CONNECTED state (corresponds to the above-discussed connected state) or the RRC_IDLE state (not discussed above).

A further set of variants of the above four solutions deals with the above-discussed challenge of having a much longer multi-SDT procedure. One possible problem in relation therewith is that the UE may move to another cell during this multi-SDT procedure (which is also possible but much less likely for the single-SDT procedure), such that e.g. the radio resources granted by the old serving gNB cannot be used anymore by the UE when camping at the new serving gNB.

According to one variant to solve this problem, the UE can inform its serving base station when the link quality of the serving cell drops below a certain threshold. In said case, the UE can multiplex the small data with a buffer status report indicating an empty buffer using the next uplink grant. The serving base station determines from the buffer status report that no further uplink small data transmission need to be scheduled for this inactive UE. Hence, the problem of not being able to utilize the UL grants allocated for subsequent uplink data transmissions due to UE's mobility can be prevented.

According to another variant to solve this problem, the UE does not inform the serving gNB that the UE will move to another cell (as in the above variant) Instead, the gNB configures a smaller value to the timer/counter corresponding to each of the above four solutions. This is to shorten the entire duration of the multi-SDT procedure and hence the mentioned problem can be alleviated.

Another problem discussed in this connection is that the UE may not be able to ascertain whether previously-transmitted UL data was correctly received by the old serving gNB. In said case, some UL data may still remain the HARQ buffer.

According to one variant to solve this problem, the UE may still initiate a small data transmission procedure based on the uplink data remaining in the HARQ buffer, even if the corresponding buffer of the logical channel is empty. Typically, in some prior art solutions, only the uplink data that is queuing in the logical channel buffer will trigger the small data transmission procedure.

According to another variant to solve this problem, the UE reselect the cell regardless of the HARQ buffer status or the logical channel buffer status and, if necessary, recovery mechanisms provided by higher layers of the system, such as the RLC/TCP recovery mechanisms are used.

### Further Aspects

According to a first aspect, a user equipment, is provided that includes the following. A receiver of the UE receives an assignment of a UE identification from a base station that is currently serving the UE. The UE is in an inactive state out of a connected state, an idle state and the inactive state. The UE identification is usable by the inactive UE to perform a monitoring function for reception of resource assignments, at least including uplink resource assignments, transmitted from the serving base station. The receiver receives an uplink resource assignment transmitted from the serving base station, based on the UE identification. The received uplink resource assignment assigns radio resources usable by the inactive U E for the transmission of small data. A transmitter of the UE performs transmission of the small data to the serving base station, based on the received uplink resource assignment. A processor determines whether to extend the monitoring function for reception of at least another uplink resource assignment based on the UE identification, wherein the determination is based on a message received from the serving base station or based on whether the UE has further small data available for transmission.

According to a second aspect provided in addition to the first aspect, the message is the received uplink resource assignment, wherein the processor determines to extend the monitoring function, upon receiving the uplink resource assignment or upon performing the transmission of the small data based on the received uplink resource assignment, or upon transmitting a buffer status report that indicates that further small data is available for transmission by the UE.

According to a third aspect provided in addition to the second aspect, the discard of the UE-identification is controlled based on one or two timers, comprising:
operating a timer for controlling validity of the UE identification, wherein the timer is started when starting to perform the monitoring function, and wherein the timer is restarted upon receiving the uplink resource assignment or upon performing the transmission of the small data, or upon transmitting a buffer status report that indicates that further small data is available for transmission by the UE and wherein the processor determines to discard the UE identification upon the timer expiring, or
operating a first timer and a second timer respectively for controlling validity of the UE identification, wherein the first timer is started when starting to perform the monitoring function, and wherein the second timer is started and respectively restarted each time upon receiving the uplink resource assignment or each time upon performing the transmission of the small data, or each time upon transmitting a buffer status report that indicates that further small data is available for transmission by the UE and wherein the processor determines to discard the UE identification when both the first timer and the second timer are not running.

According to a fourth aspect provided in addition to the second or third aspect, the receiver receives a UE-state-indication message from the serving base station, instructing the inactive UE to stay in the inactive state. The UE identification is discarded, upon receiving the UE-state-indication message. In an optional implementation, the processor stops performing the monitoring function for reception of other uplink resource assignments upon receiving the UE-state-indication message. In another optional implementation, the UE-state-indication message is a response to a connection resume request message previously transmitted by the inactive UE to the serving base station.

According to a fifth aspect, provided in addition to the first aspect, the processor determines to extend the monitoring function, if the message includes a monitoring indication that indicates to the inactive UE to extend the monitoring function. The message is a UE-state-indication message, instructing the inactive UE to stay in the inactive state and including the monitoring indication that indicates whether to extend the monitoring function or not. In an optional implementation, the UE-state-indication message is a response to a connection resume request message previously transmitted by the inactive UE to the serving base station.

According to a sixth aspect, provided in addition to the second fifth aspect, the processor, upon having reached an amount of monitoring time, stops performing the monitoring function for reception of other uplink resource assignments. The amount of monitoring time is determined based on information comprised in the message or based on pre-configured information available by the inactive UE, optionally wherein the pre-configured information is provided to the UE by a system information broadcast from the serving base station, or by a previous higher-layer configuration message from a base station, or from a Universal Subscriber Identity Module of the inactive UE, or from a requirement of a technical standard. In an optional implementation, the amount of monitoring time is extended upon receiving the uplink resource assignment or upon performing the transmission of the small data based on the received uplink resource assignment, or upon transmitting a buffer status report that indicates that further small data is available for transmission by the UE.

According to a seventh aspect provided in addition to the fifth or sixth aspect, the message further provides information on a number of uplink resource assignments. The processor, upon having received the number of uplink resource assignments, stops performing the monitoring function for reception of other uplink resource assignments.

According to an eighth aspect provided in addition to one of the fifth to seventh aspects, the monitoring indication is:
- included in the UE-state-indication message, or
- transmitted together with the UE-state-indication message or
- included in a downlink resource assignment that assigns the downlink radio resources usable by the inactive UE to receive the UE-state-indication message.

According to a ninth aspect provided in addition to one of the fifth to eighth aspects, discard of the UE-identification is controlled based on the monitoring function. In an optional implementation, the processor determines to discard the UE identification upon determining to stop performing the monitoring function. In an optional implementation, the processor determines to discard the UE identification, if the monitoring indication indicates to the inactive UE to not extend the monitoring time.

According to a tenth aspect provided in addition to the first aspect, the processor determines to extend the monitoring function, if the message includes a monitoring indication that indicates to the inactive UE to extend the monitoring function. The message is a resource assignment, assigning radio resources usable by the inactive UE for the reception or transmission of data and including the monitoring indication that indicates whether to extend the monitoring function or not. In an optional implementation, the processor stops the monitoring function, if the monitoring indication of the resource assignment indicates to not extend the monitoring function.

According to an eleventh aspect, provided in addition to the tenth aspect, discard of the UE-identification is controlled based on the monitoring indication. The processor determines to discard the UE Identification if the monitoring indication indicates to not extend the monitoring function, or wherein discard of the UE-identification is controlled based on two timers, comprising:
operating a first timer and a second timer respectively for controlling validity of the UE identification, wherein the first timer is started when starting to perform the monitoring function, and wherein the second timer is started and respectively restarted if the monitoring indication indicates to extend the monitoring function, and wherein the processor determines to discard the UE identification when both the first timer and the second timer are not running.

According to a twelfth aspect, provided in addition to the first aspect, the processor determines to extend the monitoring function, in case the UE has further small data available for transmission. In an optional implementation the transmitter transmits a buffer status report to the serving base station, in case the inactive UE has further small data available for transmission. In an optional implementation the buffer status report is transmitted together with the small data.

According to a thirteenth aspect, provided in addition to one of the first to twelfth aspects, the UE identification is assigned to the inactive UE during a random access procedure performed between the inactive UE and the serving base station. In an optional implementation the random access procedure includes two steps, wherein the transmission of the first small data is performed with a first message of the two-step random access procedure. In an optional implementation the random access procedure includes four steps, wherein the transmission of the first small data is performed with a third message of the four-step random access procedure. In an optional implementation a first transmission of small data is performed as part of the random access procedure performed between the UE and the base station.

According to a fourteenth aspect, provided in addition to one of the first to thirteenth aspects, a buffer status report is transmitted by the inactive UE to the serving base station, the buffer status report providing information on data being available for transmission of a buffer of the inactive UE.

According to a fifteenth aspect, provided in addition to one of the first to fourteenth aspects, the inactive state, the connected state and the idle state are related to the Radio Resource Control, RRC, protocol.

According to a sixteenth aspect, provided in addition to one of the first to the fifteenth aspects, the receiver receives from the serving base station a UE-state instruction, instructing the inactive UE to transition to the connected state or to stay in the inactive state. The processor controls the UE state to be in accordance with the received UE-state instruction. In an optional implementation the UE-state instruction is transmitted by the base station in response to a connection request message transmitted by the inactive UE.

According to a seventeenth aspect, a method is provided comprising the following steps performed by a user equipment.
receiving an assignment of a UE identification from a base station that is currently serving the UE, wherein the UE is in an inactive state out of a connected state, an idle state and the inactive state, and wherein the UE identification is usable by the inactive UE to perform a monitoring function for reception of resource assignments, at least including uplink resource assignments, transmitted from the serving base station,
receiving an uplink resource assignment transmitted from the serving base station, based on the UE identification, wherein the received uplink resource assignment assigns radio resources usable by the inactive UE for the transmission of small data,
performing transmission of the small data to the serving base station, based on the received uplink resource assignment,
determining whether to extend the monitoring function for reception of at least another uplink resource assignment based on the UE identification, wherein the determination is based on a message received from the serving base station or based on whether the UE has further small data available for transmission.According to an eighteenth aspect, a base station is provided comprising the following. A transmitter, of the base station transmits an assignment of a UE identification to a user equipment currently being served by the base station, wherein the UE is in an inactive state out of a connected state, an idle state and the inactive state, and wherein the UE identification is usable by the base station to transmit resource assignments, at least including uplink resource assignments, to the UE. The transmitter transmits an uplink resource assignment to the inactive UE, based on the UE identification, wherein the transmitted uplink resource assignment assigns radio resources usable by the inactive UE for the transmission of small data, wherein the transmitted uplink resource assignment is receivable by the inactive UE based on the inactive UE performing a monitoring function for reception of resource assignments based on the assigned UE identification. A receiver of the base station performs reception of the small data from the inactive UE, based on the transmitted uplink resource assignment. The transmitter transmits, to the inactive UE, a message, based on which the inactive UE determines whether to extend the monitoring function for reception of at least another uplink resource assignment based on the UE identification.

According to a nineteenth aspect, a method is provided comprising the following steps performed by a base station.
transmitting an assignment of a UE identification to a user equipment currently being served by the base station, wherein the UE is in an inactive state out of a connected state, an idle state and the inactive state, and wherein the UE identification is usable by the base station to transmit resource assignments, at least including uplink resource assignments, to the UE,
transmitting an uplink resource assignment to the inactive UE, based on the UE identification, wherein the transmitted uplink resource assignment assigns radio resources usable by the inactive UE for the transmission of small data, wherein the transmitted uplink resource assignment is receivable by the inactive UE based on the inactive UE performing a monitoring function for reception of resource assignments based on the assigned UE identification,
performing reception of the small data from the inactive UE, based on the transmitted uplink resource assignment,
transmitting, to the inactive UE, a message, based on which the inactive UE determines whether to extend the monitoring function for reception of at least another uplink resource assignment based on the UE identification.

According to a twentieth aspect, an integrated circuit is provided which controls the process of a user equipment, the process comprising the following steps performed by the user equipment.
receiving an assignment of a UE identification from a base station that is currently serving the UE, wherein the UE is in an inactive state out of a connected state, an idle state and the inactive state, and wherein the UE identification is usable by the inactive UE to perform a monitoring function for reception of resource assignments, at least including uplink resource assignments, transmitted from the serving base station,
receiving an uplink resource assignment transmitted from the serving base station, based on the UE identification, wherein the received uplink resource assignment assigns radio resources usable by the inactive UE for the transmission of small data,
performing transmission of the small data to the serving base station, based on the received uplink resource assignment,
determining whether to extend the monitoring function for reception of at least another uplink resource assignment based on the UE identification, wherein the determination is based on a message received from the serving base station or based on whether the UE has further small data available for transmission.

According to a 21^{st} aspect, an integrated circuit is provided which controls the process of a base station, the process comprising the following steps performed by the base station.
transmitting an assignment of a UE identification to a user equipment currently being served by the base station, wherein the UE is in an inactive state out of a connected state, an idle state and the inactive state, and wherein the UE identification is usable by the base station to transmit resource assignments, at least including uplink resource assignments, to the UE,
transmitting an uplink resource assignment to the inactive UE, based on the UE identification, wherein the transmitted uplink resource assignment assigns radio resources usable by the inactive UE for the transmission of small data, wherein the transmitted uplink resource assignment is receivable by the inactive UE based on the inactive UE performing a monitoring function for reception of resource assignments based on the assigned UE identification,
performing reception of the small data from the inactive UE, based on the transmitted uplink resource assignment,
transmitting, to the inactive UE, a message, based on which the inactive UE determines whether to extend the monitoring function for reception of at least another uplink resource assignment based on the UE identification.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation, receives an assignment of a UE identification from a base station that is currently serving the UE, wherein the UE is in an inactive state out of a connected state, an idle state and the inactive state, and wherein the UE identification is usable by the inactive UE to perform a monitoring function for reception of resource assignments, at least including uplink resource assignments, transmitted from the serving base station,
the receiver, which in operation, receives an uplink resource assignment transmitted from the serving base station, based on the UE identification, wherein the received uplink resource assignment assigns radio resources usable by the inactive UE for the transmission of small data,
a transmitter, which in operation, performs transmission of the small data to the serving base station, based on the received uplink resource assignment,
a processor, which in operation, determines whether to extend the monitoring function for reception of at least another uplink resource assignment based on the UE identification, wherein the determination is based on a message received from the serving base station or based on whether the UE has further small data available for transmission.

2. The UE according to claim 1, wherein the message is the received uplink resource assignment, wherein the processor, when in operation, determines to extend the monitoring function, upon receiving the uplink resource assignment or upon performing the transmission of the small data based on the received uplink resource assignment, or upon transmitting a buffer status report that indicates that further small data is available for transmission by the UE.

3. The UE according to claim 2, wherein discard of the UE-identification is controlled based on one or two timers, comprising:
operating a timer for controlling validity of the UE identification, wherein the timer is started when starting to perform the monitoring function, and wherein the timer is restarted upon receiving the uplink resource assignment or upon performing the transmission of the small data, or upon transmitting a buffer status report that indicates that further small data is available for transmission by the UE and wherein the processor determines to discard the UE identification upon the timer expiring, or
operating a first timer and a second timer respectively for controlling validity of the UE identification, wherein the first timer is started when starting to perform the monitoring function, and wherein the second timer is started and respectively restarted each time upon receiving the uplink resource assignment or each time upon performing the transmission of the small data, or each time upon transmitting a buffer status report that indicates that further small data is available for transmission by the UE and wherein the processor determines to discard the UE identification when both the first timer and the second timer are not running.

4. The UE according to claim 2 or 3, wherein the receiver, when in operation, receives a UE-state-indication message from the serving base station, instructing the inactive UE to stay in the inactive state,
wherein the UE identification is discarded, upon receiving the UE-state-indication message,
optionally wherein the processor, when in operation, stops performing the monitoring function for reception of other uplink resource assignments upon receiving the UE-state-indication message,
optionally wherein the UE-state-indication message is a response to a connection resume request message previously transmitted by the inactive UE to the serving base station.

5. The UE according to claim 1, wherein the processor, when in operation, determines to extend the monitoring function, if the message includes a monitoring indication that indicates to the inactive UE to extend the monitoring function,
wherein the message is a UE-state-indication message, instructing the inactive UE to stay in the inactive state and including the monitoring indication that indicates whether to extend the monitoring function or not,
optionally wherein the UE-state-indication message is a response to a connection resume request message previously transmitted by the inactive UE to the serving base station.

6. The UE according to claim 5, wherein the processor, when in operation and upon having reached an amount of monitoring time, stops performing the monitoring function for reception of other uplink resource assignments,
wherein the amount of monitoring time is determined based on information comprised in the message or based on pre-configured information available by the inactive UE, optionally wherein the pre-configured information is provided to the UE by a system information broadcast from the serving base station, or by a previous higher-layer configuration message from a base station, or from a Universal Subscriber Identity Module of the inactive UE, or from a requirement of a technical standard,
optionally wherein the amount of monitoring time is extended upon receiving the uplink resource assignment or upon performing the transmission of the small data based on the received uplink resource assignment, or upon transmitting a buffer status report that indicates that further small data is available for transmission by the UE.

7. The UE according to claim 5 or 6, wherein the message further provides information on a number of uplink resource assignments, wherein the processor, when in operation and upon having received the number of uplink resource assignments, stops performing the monitoring function for reception of other uplink resource assignments.

8. The UE according to any of claims 5 to 7, wherein the monitoring indication is:
° included in the UE-state-indication message, or
° transmitted together with the UE-state-indication message or
° included in a downlink resource assignment that assigns the downlink radio resources usable by the inactive UE to receive the UE-state-indication message.

9. The UE according to any of claims 5 to 8, wherein discard of the UE-identification is controlled based on the monitoring function, optionally wherein the processor, when in operation, determines to discard the UE identification upon determining to stop performing the monitoring function,
optionally wherein the processor, when in operation, determines to discard the UE identification, if the monitoring indication indicates to the inactive UE to not extend the monitoring time.

10. The UE according to claim 1, wherein the processor, when in operation, determines to extend the monitoring function, if the message includes a monitoring indication that indicates to the inactive UE to extend the monitoring function,
wherein the message is a resource assignment, assigning radio resources usable by the inactive UE for the reception or transmission of data and including the monitoring indication that indicates whether to extend the monitoring function or not,
optionally wherein the processor, when in operation, stops the monitoring function, if the monitoring indication of the resource assignment indicates to not extend the monitoring function.

11. The UE according to claim 10, wherein discard of the UE-identification is controlled based on the monitoring indication, wherein the processor, when in operation, determines to discard the UE Identification if the monitoring indication indicates to not extend the monitoring function, or
wherein discard of the UE-identification is controlled based on two timers, comprising:
operating a first timer and a second timer respectively for controlling validity of the UE identification, wherein the first timer is started when starting to perform the monitoring function, and wherein the second timer is started and respectively restarted if the monitoring indication indicates to extend the monitoring function, and wherein the processor determines to discard the UE identification when both the first timer and the second timer are not running.

12. The UE according to claim 1, wherein the processor, when in operation, determines to extend the monitoring function, in case the UE has further small data available for transmission,
optionally wherein the transmitter, when in operation, transmits a buffer status report to the serving base station, in case the inactive UE has further small data available for transmission,
optionally wherein the buffer status report is transmitted together with the small data.

13. A method comprising the following steps performed by a user equipment, UE:
receiving an assignment of a UE identification from a base station that is currently serving the UE, wherein the UE is in an inactive state out of a connected state, an idle state and the inactive state, and wherein the UE identification is usable by the inactive UE to perform a monitoring function for reception of resource assignments, at least including uplink resource assignments, transmitted from the serving base station,
receiving an uplink resource assignment transmitted from the serving base station, based on the UE identification, wherein the received uplink resource assignment assigns radio resources usable by the inactive UE for the transmission of small data,
performing transmission of the small data to the serving base station, based on the received uplink resource assignment,
determining whether to extend the monitoring function for reception of at least another uplink resource assignment based on the UE identification, wherein the determination is based on a message received from the serving base station or based on whether the UE has further small data available for transmission.

14. A base station comprising:
a transmitter, which in operation, transmits an assignment of a UE identification to a user equipment currently being served by the base station, wherein the UE is in an inactive state out of a connected state, an idle state and the inactive state, and wherein the UE identification is usable by the base station to transmit resource assignments, at least including uplink resource assignments, to the UE,
the transmitter, which in operation, transmits an uplink resource assignment to the inactive UE, based on the UE identification, wherein the transmitted uplink resource assignment assigns radio resources usable by the inactive UE for the transmission of small data, wherein the transmitted uplink resource assignment is receivable by the inactive UE based on the inactive UE performing a monitoring function for reception of resource assignments based on the assigned UE identification,
a receiver, which in operation, performs reception of the small data from the inactive UE, based on the transmitted uplink resource assignment,
the transmitter, which in operation, transmits, to the inactive UE, a message, based on which the inactive UE determines whether to extend the monitoring function for reception of at least another uplink resource assignment based on the UE identification.

15. An integrated circuit, which, in operation, controls a process of a user equipment, the process comprising the following steps performed by the user equipment:
receiving an assignment of a UE identification from a base station that is currently serving the UE, wherein the UE is in an inactive state out of a connected state, an idle state and the inactive state, and wherein the UE identification is usable by the inactive UE to perform a monitoring function for reception of resource assignments, at least including uplink resource assignments, transmitted from the serving base station,
receiving an uplink resource assignment transmitted from the serving base station, based on the UE identification, wherein the received uplink resource assignment assigns radio resources usable by the inactive UE for the transmission of small data,
performing transmission of the small data to the serving base station, based on the received uplink resource assignment,
determining whether to extend the monitoring function for reception of at least another uplink resource assignment based on the UE identification, wherein the determination is based on a message received from the serving base station or based on whether the UE has further small data available for transmission.
